(19) Europäisches Patentamt
European Patent Office
Office européen des brevets

(11) **EP 4 694 129 A1**

(12) **EUROPEAN PATENT APPLICATION**
published in accordance with Art. 153(4) EPC

(43) Date of publication:
**11.02.2026 Bulletin 2026/07**

(51) International Patent Classification (IPC):
**H04N 19/40** (2014.01)

(21) Application number: **24853830.8**

(22) Date of filing: **14.08.2024**

(52) Cooperative Patent Classification (CPC):
**G06T 1/00; G06T 3/40; G06T 5/50; G06T 5/73;
H04N 19/40**

(86) International application number:
**PCT/CN2024/112174**

(87) International publication number:
**WO 2025/036423 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.08.2023 CN 202311037360
13.08.2024 CN 202411111044**

(71) Applicant: **Huawei Technologies Co., Ltd.
Shenzhen, Guangdong 518129 (CN)**

(72) Inventors:
• **XU, Weiwei**
  **Shenzhen, Guangdong 518129 (CN)**
• **YU, Quanhe**
  **Shenzhen, Guangdong 518129 (CN)**
• **WANG, Yichuan**
  **Shenzhen, Guangdong 518129 (CN)**

(74) Representative: **Grünecker Patent- und
Rechtsanwälte
PartG mbB
Leopoldstraße 4
80802 München (DE)**

(54) **IMAGE PROCESSING METHOD AND APPARATUS**

(57) Embodiments of this application provide an image processing method and apparatus. The method includes: performing image processing on a first double-layer bitstream, and outputting a second double-layer bitstream. The first double-layer bitstream includes first encoded data representing a first base image and second encoded data representing a first enhancement image. The second double-layer bitstream includes third encoded data representing a second base image and fourth encoded data representing a second enhancement image. The first base image and the first enhancement image are used to obtain a first composite image, the second base image and the second enhancement image are used to obtain a second composite image, and a difference between the first composite image and the second composite image relates to an image processing operation. In this application, image processing on the double-layer bitstream can be implemented, so that the output double-layer bitstream meets requirements of different scenarios.

S801: Obtain a first double-layer bitstream, where the first double-layer bitstream includes first encoded data and second encoded data, the first encoded data represents a first base image, the second encoded data represents a first enhancement image, and the first base image and the first enhancement image are used to obtain a first composite image

S802: Perform an image processing operation based on the first double-layer bitstream, to obtain third encoded data and fourth encoded data, where the third encoded data represents a second base image, the fourth encoded data represents a second enhancement image, the second base image and the second enhancement image are used to obtain a second composite image, and a difference between the second composite image and the first composite image relates to the image processing operation

S803: Output a second double-layer bitstream, where the second double-layer bitstream includes the third encoded data and the fourth encoded data

FIG. 8

EP 4 694 129 A1

## Description

This application claims priorities to Chinese Patent Application No. 202311037360.4, filed with the China National Intellectual Property Administration on August 15, 2023 and entitled "IMAGE PROCESSING METHOD AND APPARATUS", and to Chinese Patent Application No. 202411111044.1, filed with the China National Intellectual Property Administration on August 13, 2024 and entitled "IMAGE PROCESSING METHOD AND APPARATUS", both of which are incorporated herein by reference in their entireties.

## TECHNICAL FIELD

Embodiments of this application relate to the field of image processing, and in particular, to an image processing method and apparatus.

## BACKGROUND

Currently, an image processing procedure generally includes front-end processing (for example, including image generation and image encoding), intermediate processing (for example, including transcoding and re-encoding), and back-end processing (for example, including decoding and display). However, the current image processing procedure is usually for a single-layer bitstream, for example, supporting only a high dynamic range (High Dynamic Range, HDR) image or a standard dynamic range (standard dynamic range, SDR) image. How to process a double-layer bitstream becomes an urgent problem to be resolved.

## SUMMARY

This application provides an image processing method and apparatus. In the method, a transcoder side may perform image processing on a double-layer bitstream, to output a double-layer bitstream that meets requirements of scenarios.

According to a first aspect, this application provides an image processing method. The method includes: A transcoder side obtains a first double-layer bitstream, where the first double-layer bitstream includes first encoded data and second encoded data, the first encoded data represents a first base image, the second encoded data represents a first enhancement image, and the first base image and the first enhancement image are used to obtain a first composite image. The transcoder side performs an image processing operation based on the first double-layer bitstream, to obtain third encoded data and fourth encoded data. The third encoded data represents a second base image, the fourth encoded data represents a second enhancement image, the second base image and the second enhancement image are used to obtain a second composite image, and a difference between the second composite image and the first composite image relates to the image processing operation. The transcoder side outputs a second double-layer bitstream, where the second double-layer bitstream includes the third encoded data and the fourth encoded data. Therefore, the image processing method provided in embodiments of this application may be applied to a double-layer bitstream scenario, to output, based on the received double-layer bitstream, a double-layer bitstream that meet requirements of different scenarios.

For example, the transcoder side may alternatively be a transcoding device or an image processing apparatus. This is not limited in this application.

For example, it may be understood that the first encoded data is obtained by encoding the first base image, the second encoded data is obtained by encoding the second enhancement image, the third encoded data is obtained by encoding the second base image, and the fourth encoded data is obtained by encoding the second enhancement image. Optionally, the encoding operation performed on the first base image and the second enhancement image may be performed by a transmit end.

For example, the first double-layer bitstream obtained by the transcoder side may be obtained from the transmit end. Optionally, the transmit end and the transcoder side may belong to one device, or may be separate devices. For example, the transmit end may be a terminal device, and the transcoder side may be a server. This is not limited in this application.

For example, the first double-layer bitstream and the second double-layer bitstream may further include metadata.

For example, the first double-layer bitstream and the second double-layer bitstream may comply with a same encoding format or different encoding formats.

In a possible implementation, the method further includes: The transcoder side decodes the first encoded data to obtain the first base image, and decodes the second encoded data to obtain the first enhancement image. The transcoder side combines the first base image and the first enhancement image, to obtain the first composite image. Therefore, the transcoder side may locally obtain the first composite image. It may be understood that the transcoder side performs decoding and composition operations that are the same as those performed by a receive end, or it may be understood that the transcoder side performs an operation inverse to that performed by the transmit end. In other words, the transmit end obtains the first enhancement image based on the first base image and the first composite image. The receive end obtains the first composite image based on the first base image and the first enhancement image. In this application, the transcoder side obtains the first composite image based on the first base image and the first enhancement image, and processes the first composite image in a subsequent image processing process, so that after the receive end receives the second double-layer bitstream and obtains the first composite image, the first composite image processed by the transcoder side can be displayed.

In a possible implementation, the performing the image processing operation based on the first double-layer bitstream, to obtain the third encoded data and the fourth encoded data includes: performing the image processing operation on the first composite image, to obtain the second composite image; obtaining the second base image based on the second composite image; and obtaining the third encoded data and the fourth encoded data based on the second composite image and the second base image. Therefore, the transcoder side in this application may perform corresponding image processing operations based on different requirements of scenarios, to meet requirements of different scenarios for image quality or image content. In addition, the transcoder side performs the image processing operation on the first composite image, and then obtains the second base image based on the processed second composite image, so that the second composite image, the second base image, and the second enhancement image have a same image feature (for example, all are upscaled or watermarked) as the image processing operation. This ensures image consistency.

In a possible implementation, the performing the image processing operation based on the first double-layer bitstream, to obtain the third encoded data and the fourth encoded data includes: performing the image processing operation on the first composite image, to obtain the second composite image; performing the image processing operation on the first base image, to obtain the second base image; and obtaining the third encoded data and the fourth encoded data based on the second composite image and the second base image. Therefore, the transcoder side in this application may perform corresponding image processing operations based on different requirements of scenarios, to meet requirements of different scenarios for image quality or image content. In addition, the transcoder side separately performs the image processing operation on the first base image and the first composite image, so that the second composite image, the second base image, and the second enhancement image have a same image feature (for example, all are upscaled or watermarked) as the image processing operation. This ensures image consistency.

In a possible implementation, the obtaining the third encoded data and the fourth encoded data based on the second composite image and the second base image includes: obtaining the second enhancement image based on the second composite image and the second base image; encoding the second base image, to obtain the third encoded data; and encoding the second enhancement image, to obtain the fourth encoded data. Therefore, the second enhancement image is obtained based on the second composite image and the second base image that are obtained through image processing, so that the enhancement image has an image feature that is the same as (or related to) that of the second base image and the second composite image. The image feature is an image feature associated with the image processing operation.

In a possible implementation, the obtaining the third encoded data and the fourth encoded data based on the second composite image and the second base image includes: encoding the second base image, to obtain the third encoded data; and obtaining the fourth encoded data based on the third encoded data and the second composite image.

In a possible implementation, the performing the image processing operation based on the first bitstream, to obtain the third encoded data and the fourth encoded data includes: performing the image processing operation on the first composite image, to obtain the second composite image, where the second base image is the first base image; and obtaining the third encoded data and the fourth encoded data based on the second composite image and the second base image.

For example, the transcoder side may input the first base image to an image processing module, the image processing module does not process the first base image, and the second base image output by the image processing module is the first base image. Certainly, in some examples, the first base image may not be input to the image processing module, but is directly input to a back end of the image processing module as the second base image for a subsequent operation.

In a possible implementation, the performing the image processing operation based on the first double-layer bitstream, to obtain the third encoded data and the fourth encoded data includes: using the second composite image as the first composite image; performing the image processing operation on the first base image, to obtain the second base image; and obtaining the third encoded data and the fourth encoded data based on the second composite image and the second base image. Therefore, when performing image processing operations, the transcoder side may perform image processing operations for different objects, to meet different image quality requirements of different scenarios.

For example, the transcoder side may input the first composite image to the image processing module, the image processing module does not process the first composite image, and the second composite image output by the image processing module is the first composite image. Certainly, in some examples, the first composite image may not be input to the image processing module, but is directly input to the back end of the image processing module as the second composite image for a subsequent operation.

In a possible implementation, the performing the image processing operation based on the first bitstream, to obtain the third encoded data and the fourth encoded data includes: performing the image processing operation on the first base image, to obtain the second base image; obtaining the second composite image based on the second base image; and obtaining the third encoded data and the fourth encoded data based on the second composite image and the second base image. Therefore, when performing image processing operations, the transcoder side may perform image processing operations for different objects, to meet different image quality requirements of different scenarios.

In a possible implementation, the performing the image processing operation based on the first double-layer bitstream, to obtain the third encoded data and the fourth encoded data includes: performing the image processing operation on the first base image, to obtain the second base image; performing the image processing operation on the first enhancement image, to obtain the second enhancement image; and obtaining the third encoded data and the fourth encoded data based on the second enhancement image and the second base image. Therefore, when performing image processing operations, the transcoder side may perform image processing operations for different objects, to meet different image quality requirements of different scenarios.

In a possible implementation, the obtaining the third encoded data and the fourth encoded data based on the second enhancement image and the second base image includes: encoding the second base image, to obtain the third encoded data; and encoding the second enhancement image, to obtain the fourth encoded data.

In a possible implementation, an operation manner of the image processing operation is obtained, where the operation manner includes at least one of the following: upscaling, downscaling, sharpening, blurring, watermarking, or watermark removal. Therefore, the transcoder side in this application can provide different image processing manners, to meet requirements of different scenarios.

In a possible implementation, the operation manner is preset, or the obtaining the operation manner of the image processing operation includes: determining the operation manner based on a received user operation or user requirement; or obtaining the operation manner from the first double-layer bitstream. Therefore, the transcoder side can perform image processing on an image based on a requirement of the transmit end, a requirement of a user, and/or a preset requirement of the transcoder side, to output a double-layer bitstream that meets requirements of different scenarios.

In a possible implementation, the difference includes at least one of the following: resolution of the second composite image is different from resolution of the first composite image; or definition of the second composite image is different from definition of the first composite image; or image content of the second composite image has a watermark or has no watermark compared with that of the first composite image.

According to a second aspect, this application provides an image processing apparatus, including: an obtaining module, configured to obtain a first double-layer bitstream, where the first double-layer bitstream includes first encoded data and second encoded data, the first encoded data represents a first base image, the second encoded data represents a first enhancement image, and the first base image and the first enhancement image are used to obtain a first composite image; and an image processing module, configured to perform an image processing operation based on the first double-layer bitstream, to obtain third encoded data and fourth encoded data, where the third encoded data represents a second base image, the fourth encoded data represents a second enhancement image, the second base image and the second enhancement image are used to obtain a second composite image, and a difference between the second composite image and the first composite image relates to the image processing operation. The image processing module is further configured to output a second double-layer bitstream, where the second double-layer bitstream includes the third encoded data and the fourth encoded data.

In a possible implementation, the apparatus further includes: a decoding module, configured to decode the first encoded data to obtain the first base image, and decode the second encoded data to obtain the first enhancement image; and a composition module, configured to combine the first base image and the first enhancement image, to obtain the first composite image.

In a possible implementation, the image processing module is specifically configured to perform the image processing operation on the first composite image, to obtain the second composite image; and obtain the second base image based on the second composite image. The apparatus further includes an encoding module, configured to obtain the third encoded data and the fourth encoded data based on the second composite image and the second base image.

In a possible implementation, the image processing module is specifically configured to: perform the image processing operation on the first composite image, to obtain the second composite image; and perform the image processing operation on the first base image, to obtain the second base image. The apparatus further includes an encoding module, configured to obtain the third encoded data and the fourth encoded data based on the second composite image and the second base image.

In a possible implementation, the image processing module is specifically configured to obtain the second enhancement image based on the second composite image and the second base image. The apparatus further includes the encoding module, configured to: encode the second base image, to obtain the third encoded data; and encode the second enhancement image, to obtain the fourth encoded data.

In a possible implementation, the encoding module is specifically configured to encode the second base image, to obtain the third encoded data; and obtain the fourth encoded data based on the third encoded data and the second composite image.

In a possible implementation, the image processing module is specifically configured to perform the image processing operation on the first composite image, to obtain the second composite image. The second base image is the first base image. The encoding module is configured to obtain the third encoded data and the fourth encoded data based on the second composite image and the second base image.

In a possible implementation, the second composite image is the first composite image, and the image processing module is configured to perform the image processing operation on the first base image, to obtain the second base image. The encoding module is configured to obtain the third encoded data and the fourth encoded data based on the second composite image and the second base image.

In a possible implementation, the image processing module is configured to perform the image processing operation on the first base image, to obtain the second base image; and obtain the second composite image based on the second base image. The encoding module is configured to obtain the third encoded data and the fourth encoded data based on the second composite image and the second base image.

In a possible implementation, the image processing module is configured to perform the image processing operation on the first base image, to obtain the second base image; and perform the image processing operation on the first enhancement image, to obtain the second enhancement image. The encoding module is configured to obtain the third encoded data and the fourth encoded data based on the second enhancement image and the second base image.

In a possible implementation, the encoding module is configured to encode the second base image, to obtain the third encoded data; and encode the second enhancement image, to obtain the fourth encoded data.

In a possible implementation, an operation manner of the image processing operation is obtained, where the operation manner includes at least one of the following: upscaling, downscaling, sharpening, blurring, watermarking, or watermark removal.

In a possible implementation, the operation manner is preset, or the obtaining the operation manner of the image processing operation includes: determining the operation manner based on a received user operation or user requirement; or obtaining the operation manner from the first double-layer bitstream.

In a possible implementation, the difference includes at least one of the following: resolution of the second composite image is different from resolution of the first composite image; or definition of the second composite image is different from definition of the first composite image; or image content of the second composite image has a watermark or has no watermark compared with that of the first composite image.

According to a third aspect, this application provides an image processing apparatus, including one or more processors; and a memory, configured to store one or more programs, where when the one or more programs are executed by the one or more processors, the one or more processors are enabled to: perform an image processing operation based on a first double-layer bitstream, to obtain third encoded data and fourth encoded data, where the third encoded data represents a second base image, the fourth encoded data represents a second enhancement image, the second base image and the second enhancement image are used to obtain a second composite image, and a difference between the second composite image and a first composite image relates to the image processing operation; and output a second double-layer bitstream, where the second double-layer bitstream includes the third encoded data and the fourth encoded data.

In a possible implementation, the one or more programs are executed by the one or more processors, to enable the one or more processors to: decode first encoded data to obtain a first base image, and decode second encoded data to obtain a first enhancement image; and combine the first base image and the first enhancement image, to obtain the first composite image.

In a possible implementation, the one or more programs are executed by the one or more processors, to enable the one or more processors to: perform the image processing operation on the first composite image, to obtain the second composite image; obtain the second base image based on the second composite image; and obtain the third encoded data and the fourth encoded data based on the second composite image and the second base image.

In a possible implementation, the one or more programs are executed by the one or more processors, to enable the one or more processors to: perform the image processing operation on the first composite image, to obtain the second composite image; perform the image processing operation on the first base image, to obtain the second base image; and obtain the third encoded data and the fourth encoded data based on the second composite image and the second base image.

In a possible implementation, the one or more programs are executed by the one or more processors, to enable the one or more processors to: obtain the second enhancement image based on the second composite image and the second base image; encode the second base image, to obtain the third encoded data; and encode the second enhancement image, to obtain the fourth encoded data.

In a possible implementation, the one or more programs are executed by the one or more processors, to enable the one or more processors to: encode the second base image, to obtain the third encoded data; and obtain the fourth encoded data based on the third encoded data and the second composite image.

In a possible implementation, the one or more programs are executed by the one or more processors, to enable the one or more processors to: perform the image processing operation on the first composite image, to obtain the second composite image, where the second base image is the first base image; and obtain the third encoded data and the fourth encoded data based on the second composite image and the second base image.

In a possible implementation, the one or more programs are executed by the one or more processors, to enable the one or more processors to: use the second composite image as the first composite image; perform the image processing operation on the first base image, to obtain the second base image; and obtain the third encoded data and the fourth encoded data based on the second composite image and the second base image.

In a possible implementation, the one or more programs are executed by the one or more processors, to enable the one or more processors to: perform the image processing operation on the first base image, to obtain the second base image; obtain the second composite image based on the second base image; and obtain the third encoded data and the fourth encoded data based on the second composite image and the second base image.

In a possible implementation, the one or more programs are executed by the one or more processors, to enable the one or more processors to: perform the image processing operation on the first base image, to obtain the second base image; perform the image processing operation on the first enhancement image, to obtain the second enhancement image; and obtain the third encoded data and the fourth encoded data based on the second enhancement image and the second base image.

In a possible implementation, the one or more programs are executed by the one or more processors, to enable the one or more processors to: encode the second base image, to obtain the third encoded data; and encode the second enhancement image, to obtain the fourth encoded data.

In a possible implementation, the one or more programs are executed by the one or more processors, to enable the one or more processors to obtain an operation manner of the image processing operation, where the operation manner includes at least one of the following: upscaling, downscaling, sharpening, blurring, watermarking, or watermark removal.

In a possible implementation, the operation manner is preset, or the obtaining the operation manner of the image processing operation includes: determining the operation manner based on a received user operation or user requirement; or obtaining the operation manner from the first double-layer bitstream.

In a possible implementation, the difference includes at least one of the following: resolution of the second composite image is different from resolution of the first composite image; or definition of the second composite image is different from definition of the first composite image; or image content of the second composite image has a watermark or has no watermark compared with that of the first composite image.

According to a fourth aspect, this application provides a computer-readable storage medium, including a computer program. When the computer program is executed on a computer, the computer is enabled to perform the method in any implementation of the first aspect.

According to a fifth aspect, this application provides a computer program. When the computer program is executed by a computer, the computer is configured to perform the method in any implementation of the first aspect.

According to a sixth aspect, this application further provides a computer program product. The computer program product includes computer program code. When the computer program code is run on a computer, the computer is enabled to perform operations and/or processing performed by an electronic device in any one of the foregoing method embodiments.

According to a seventh aspect, an embodiment of this application provides a bitstream structure. The bitstream includes encoded data of a first base image, encoded data of a first enhancement image, and metadata.

According to an eighth aspect, an embodiment of this application provides a bitstream structure. The bitstream includes encoded data of a first base image, encoded data of a first enhancement image, and metadata, and the metadata includes tone mapping information.

**BRIEF DESCRIPTION OF DRAWINGS**

FIG. 1 is a block diagram of an encoding/decoding system to which an embodiment of this application is applied;

FIG. 2A illustrates a block diagram of a content providing system;

FIG. 2B illustrates a structure of a terminal device;

FIG. 3A illustrates a working flowchart of a streaming media system;

FIG. 3B illustrates an architecture of a streaming media system;

FIG. 4A illustrates an architecture of an image processing system;

FIG. 4B illustrates an architecture of an image processing system;

FIG. 5 illustrates dynamic mapping from a high dynamic range of the real world to a low dynamic range of a display device;

FIG. 6 illustrates an end-to-end system of a double-layer bitstream;

FIG. 7A illustrates a system block diagram of image processing;

FIG. 7B-1 and FIG. 7B-2 illustrate a system block diagram of other image processing;

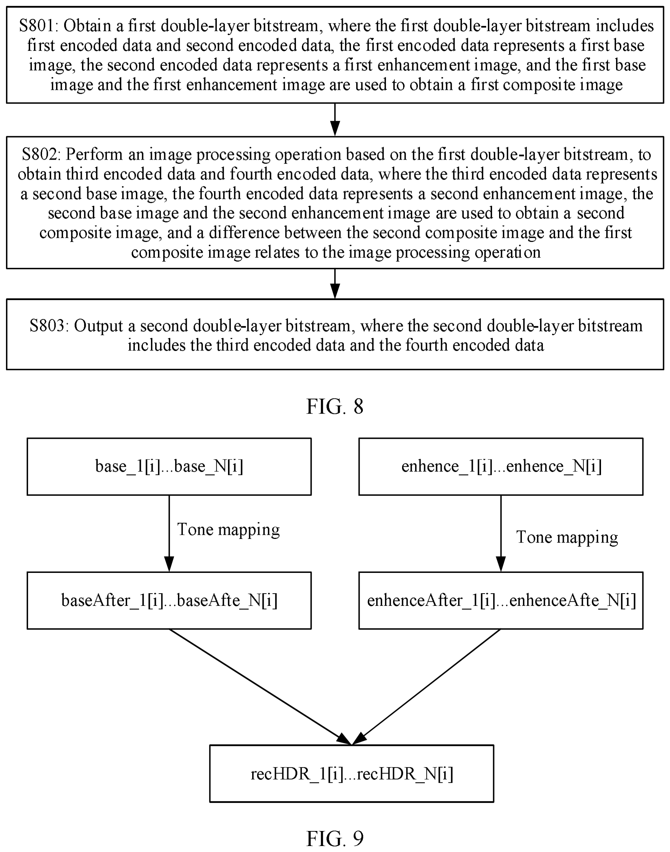

FIG. 8 illustrates a flowchart of an image processing method;

FIG. 9 illustrates a tone mapping procedure; and

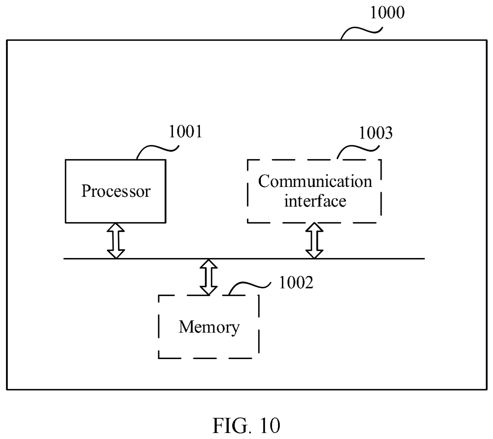

FIG. 10 illustrates a structure of an image processing apparatus.

## DESCRIPTION OF EMBODIMENTS

In embodiments of this application, the term "at least one" indicates one or more, and "a plurality of" indicates two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, or c may represent a, b, c, a and b, a and c, b and c, or a, b, and c, where any one of a, b, c, a and b, a and c, b and c, or a, b, and c may include a single a, a single b, and a single c, or may include a plurality of a, a plurality of b, and a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance degrees of the two types of criteria.

In addition, the terms "include/comprise" and "have" in embodiments, claims, and accompanying drawings of this application are not exclusive. For example, a process, a method, a system, a product, or a device including a series of steps or modules/units is not limited to the listed steps or modules, and may further include steps or modules/units that are not listed.

First, the background in this application is briefly described.

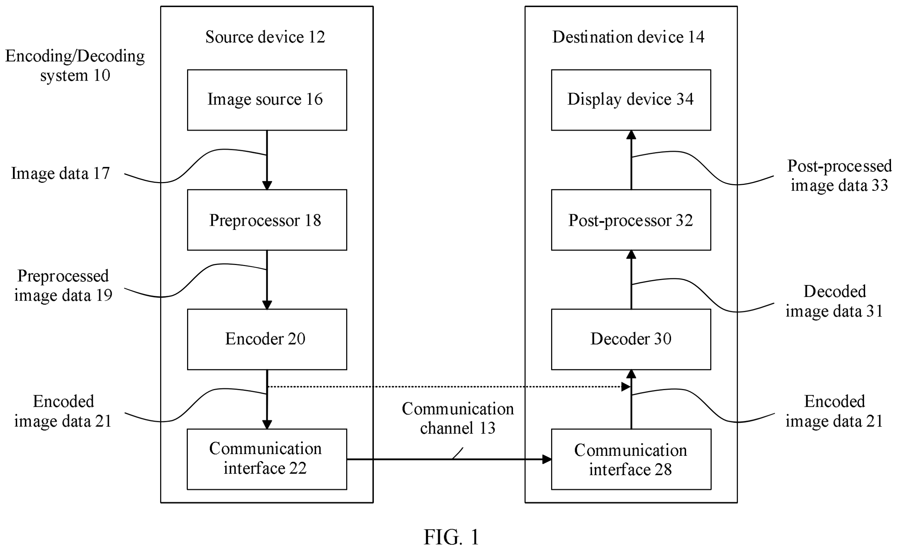

FIG. 1 is a block diagram of an encoding/decoding system to which an embodiment of this application is applied. A video encoder 20 (or an encoder 20 for short) and a video decoder 30 (or a decoder 30 for short) of a video encoding/decoding system 10 represent devices that may be configured to perform techniques based on various examples described in this application.

As shown in FIG. 1, the encoding/decoding system 10 includes a source device 12. The source device 12 is configured to provide encoded data 21 such as an encoded image to a destination device 14 for decoding the encoded data.

The source device 12 includes the encoder 20, and may optionally include an image source 16, an image preprocessor (or a preprocessing unit) 18, and a communication interface or communication unit 22.

The image source 16 may include or may be any type of image capturing device configured to capture an image in the real world, and/or any type of image generation device, for example, a computer graphics processor configured to generate a computer animated image, or any type of device configured to obtain and/or provide an image in the real world, a computer generated image (for example, content on a screen, a virtual reality (virtual reality, VR) image, and/or any combination thereof (for example, an augmented reality (augmented reality, AR) image)). The image source may be any type of memory or storage storing any of the foregoing images.

To distinguish processing performed by the preprocessor 18 or the preprocessing unit 18, an image or image data 17 may also be referred to as a raw image or raw image data 17.

Preprocessor 18 is configured to receive the (raw) image data 17 and to perform preprocessing on the image data 17, to obtain a preprocessed image 19 or preprocessed image data 19. For example, preprocessing performed by the preprocessor 18 may include trimming, color format conversion (for example, from RGB to YCbCr), color correction, or denoising. It may be understood that the preprocessing unit 18 may be an optional component.

The video encoder 20 is configured to receive preprocessed image data 19 and provide encoded image data 21.

The communication interface 22 of the source device 12 may be configured to receive the encoded image data 21 and send the encoded image data 21 (or any further processed version thereof) through a communication channel 13 to another device like the destination device 14 or any other device (for example, a transcoder side), for storage or direct reconstruction.

The destination device 14 includes the decoder 30 (for example, the video decoder 30), and may optionally include a communication interface or communication unit 28, a post-processor 32 (or post-processing unit 32), and a display device 34.

The communication interface 28 of the destination device 14 is configured to: receive the encoded image data 21 (or any further processed version thereof) directly from the source device 12 or from any other source device like a storage device, for example, the storage device is an encoded image data storage device; and provide the encoded image data 21 to the decoder 30.

The communication interface 22 and the communication interface 28 may be configured to send or receive the encoded image data 21 or encoded data over a direct communication link between the source device 12 and the destination device 14, for example, a direct wired or wireless connection, or over any type of network, for example, a wired or wireless network or any combination thereof, or any type of private and public network, or any kind of combination thereof.

The communication interface 22 may be, for example, configured to encapsulate the encoded image data 21 into an appropriate format, for example, a packet, and/or process the encoded image data using any type of transmission encoding or processing for transmission over a communication link or communication network.

The communication interface 28, corresponding to the communication interface 22, may be configured, for example, to receive the transmitted data and process the transmitted data using any kind of corresponding transmission decoding or processing and/or decapsulating to obtain the encoded image data 21.

Both the communication interface 22 and communication interface 28 may be configured as unidirectional communication interfaces as indicated by an arrow for the communication channel 13 in FIG. 1 pointing from the source device 12 to the destination device 14, or bi-directional communication interfaces, and may be configured, for example, to send and receive messages, to set up a connection, and acknowledge and exchange any other information related to the communication link and/or data transmission, for example, encoded image data transmission.

The decoder 30 is configured to receive the encoded image data 21, and provide decoded image data 31 or a decoded image 31.

The post-processor 32 of the destination device 14 is configured to post-process the decoded image data 31 (also referred to as reconstructed image data), for example, the decoded image 31, to obtain post-processed image data 33, for example, a post-processed image 33. The post-processing performed by the post-processing unit 32 may include, for example, color format conversion (for example, from YCbCr to RGB), color correction, trimming, or re-sampling, or any other processing for generating the decoded image data 31 displayed by display device 34.

The display device 34 of the destination device 14 is configured to receive the post-processed image data 33, to display an image to a user, a viewer, or the like. The display device 34 may be or may include any type of display, for example, an integrated or external display screen or display, configured to display a reconstructed image. For example, the display screen may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of another display screen.

Although FIG. 1 depicts the source device 12 and the destination device 14 as separate devices, the device embodiments may alternatively include both the source device 12 and the destination device 14 or both functions of the source device 12 and the destination device 14, that is, include both the source device 12 or a corresponding function and the destination device 14 or a corresponding function. In these embodiments, the source device 12 or the corresponding function and the destination device 14 or the corresponding function may be implemented by using same hardware and/or software or by using separate hardware and/or software or any combination thereof.

Based on the descriptions, existence and (accurate) division of different units or functions of the source device 12 and/or the destination device 14 shown in FIG. 1 may vary with actual devices and applications. This is obvious to a person skilled in the art.

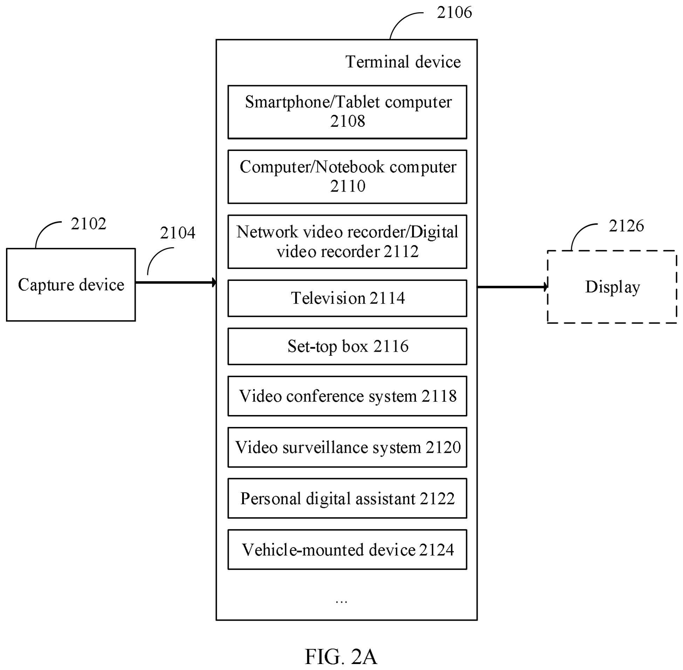

FIG. 2A illustrates a block diagram of a content providing system. The following describes a content providing system of a content delivery service used in this application with reference to FIG. 2A. The content providing system 20 includes a capture device 2102, a terminal device 2106, and (optionally) a display 2126. The capture device 2102 communicates with the terminal device 2106 over a communication link 2104. The communication link may include the communication channel 13 described above. The communication link 2104 includes but not limited to Wi-Fi, Ethernet, wired, wireless (3G/4G/5G), USB, or any kind of combination thereof, or the like.

The capture device 2102 generates data and encodes the data. Alternatively, the capture device 2102 may distribute the data to a streaming media server (not shown in the figure), and the server encodes the data and transmits the encoded data to the terminal device 2106. The capture device 2102 includes but not limited to a camera, a smartphone or tablet computer, a computer or notebook computer, a video conference system, a PDA, a vehicle-mounted device, or any combination thereof. For example, the capture device 2102 may include the foregoing source device 12. When the data includes a video, an encoder 20 of the capture device 2102 may actually perform video encoding processing. When the data includes an audio (namely, a voice), the encoder 20 of the capture device 2102 may actually perform audio encoding processing. For some practical scenarios, the capture device 2102 distributes encoded video data and encoded audio data by multiplexing the encoded video data and the encoded audio data together. For other practical scenarios, for example, in the video conference system, the encoded audio data and the encoded video data are not multiplexed. The capture device 2102 distributes the encoded audio data and the encoded video data to the terminal device 2106 separately.

The terminal device 2106 of the content providing system 20 receives and regenerates the encoded data. The terminal device 2106 may be a device with data receiving and restoring capabilities, for example, a smartphone or tablet computer 2108, a computer or laptop computer 2110, a network video recorder (network video recorder, NVR)/digital video recorder (digital video recorder, DVR) 2112, a television 2114, a set-top box (set-top box, STB) 2116, a video conference system 2118, a video surveillance system 2120, a personal digital assistant (personal digital assistant, PDA) 2122, a vehicle-mounted device 2124, or any combination thereof, or the like capable of decoding the encoded data. For example, the terminal device 2106 may include the foregoing destination device 14. When the encoded data includes a video, the video decoder 30 of the terminal device is prioritized to perform video decoding. When the encoded data includes an audio, an audio decoder of the terminal device is prioritized to perform audio decoding processing. The terminal device 2106 may be a video play application program, a streaming media play application program, a streaming media play platform, a live streaming platform, or the like that runs on the terminal device.

For a terminal device with a display, for example, the smartphone or tablet computer 2108, the computer or laptop computer 2110, the NVR/DVR 2112, the television 2114, the PDA 2122, or the vehicle-mounted device 2124, the terminal device can send decoded data to the respective display. For the terminal device without a display, for example, the STB 2116, the video conference system 3118, or the video surveillance system 2120, the terminal device is connected to the external display 2126, to receive and display the decoded data.

When each device in this system performs encoding or decoding, the image encoding device or the image decoding device, as shown in the foregoing embodiments, can be used.

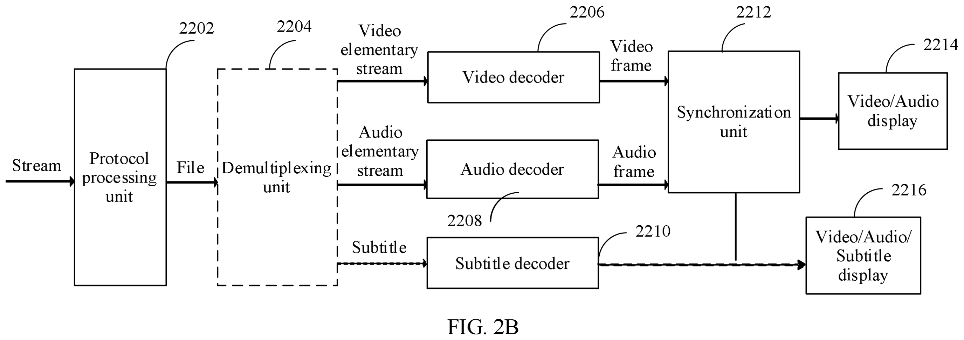

FIG. 2B is a diagram of an example structure of a terminal device 2106 in FIG. 2A. After the terminal device 2106 receives a bitstream from the capture device 2102, a protocol processing unit 2202 analyzes a transmission protocol of the bitstream. The protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof.

After the protocol processing unit 2202 processes the stream, a stream file is generated. The file is output to a demultiplexing unit 2204. The demultiplexing unit 2204 can separate multiplexed data into the encoded audio data and the encoded video data. As described above, for some practical scenarios, for example, in the video conference system, the encoded audio data and the encoded video data are not multiplexed. In this case, the encoded data is transmitted to a video decoder 3206 and an audio decoder 2208 without through the demultiplexing unit 2204.

A video elementary stream (ES), an audio ES, and an optional subtitle are generated through demultiplexing processing. The video decoder 2206 that includes the video decoder 30 as described in the foregoing embodiments decodes the video ES based on the decoding method as shown in the foregoing embodiments to generate a video frame, and sends the data to a synchronization unit 2212. The audio decoder 2208 decodes the audio ES to generate an audio frame, and sends the data to the synchronization unit 2212. Alternatively, the video frame may be stored in a buffer (not shown in the figure) before being sent to the synchronization unit 2212. Similarly, the audio frame may be stored in a buffer (not shown in the figure) before being sent to the synchronization unit 2212.

The synchronization unit 2212 synchronizes the video frame and the audio frame, and provides the video/audio to a video/audio display 2214. For example, the synchronization unit 2212 synchronizes presentation of video and audio information. The information may be encoded in syntax using time stamps related to presentation of encoded audio and visual data and time stamps related to sending of a data stream.

If a subtitle is included in the bitstream, a subtitle decoder 2210 decodes the subtitle, and synchronizes the subtitle with the video frame and the audio frame, and provides the video/audio/subtitle for a video/audio/subtitle display 2216.

The present invention is not limited to the foregoing system, and either the image encoding device or the image decoding device in the foregoing embodiments may be used in another system like a vehicle.

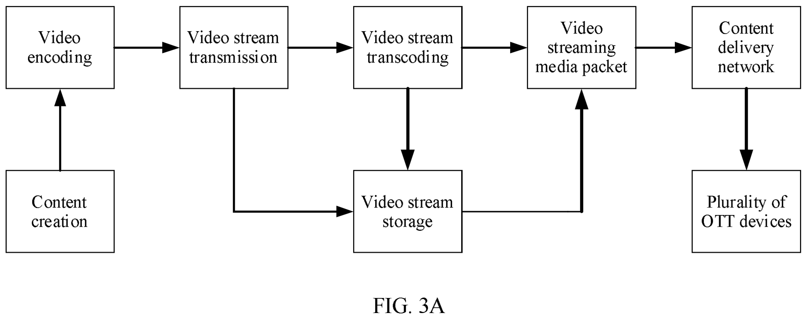

FIG. 3A is a schematic working flowchart of an example of a streaming media system to which an embodiment of this application is applicable. The following describes, with reference to FIG. 3A, the streaming media system to which an embodiment of this application is applicable.

The streaming media system includes a content creation module that generates required content data, for example, a video or an audio. The streaming media system further includes a video encoding module that encodes generated content by using an encoder. The streaming media system further includes a video stream transmission module that transmits an encoded video in a form of a bitstream. Optionally, a video stream transcoding module may convert a format of a video stream into a bitstream format of a transport protocol commonly used by an OTT (over-the-top) device. For example, the protocol includes but is not limited to the real-time streaming protocol (Real-time Streaming Protocol, RTSP), the hypertext transfer protocol (Hypertext Transfer Protocol, HTTP), the HTTP live streaming protocol (HTTP Live streaming protocol, HLS), the MPEG dynamic adaptive streaming over HTTP (MPEG Dynamic Adaptive Streaming over HTTP, MPEG-DASH), the real-time transport protocol (Real-time Transport protocol, RTP), the real-time messaging protocol (Real-time Messaging Protocol, RTMP), or any combination thereof. Optionally, a video stream storage module may store a raw format of the video stream and/or a plurality of converted bitstream formats for ease of use. Further, the streaming media system further includes a video stream encapsulation module, configured to encapsulate the video stream to generate an encapsulated video stream. The encapsulated video stream may be referred to as a video streaming media packet. For example, the video streaming media packet may be generated based on a transcoded video stream or the stored video stream. Further, the streaming media system further includes a content delivery network (content distribution network, CDN), and the CDN is configured to distribute the video streaming media packet to a plurality of OTT devices such as mobile phones, computers, tablets, and home projectors.

It should be noted that video encoding, video stream transmission, video stream transcoding, video stream storage, video streaming media packet generation, and the content delivery network may all be implemented on a cloud server.

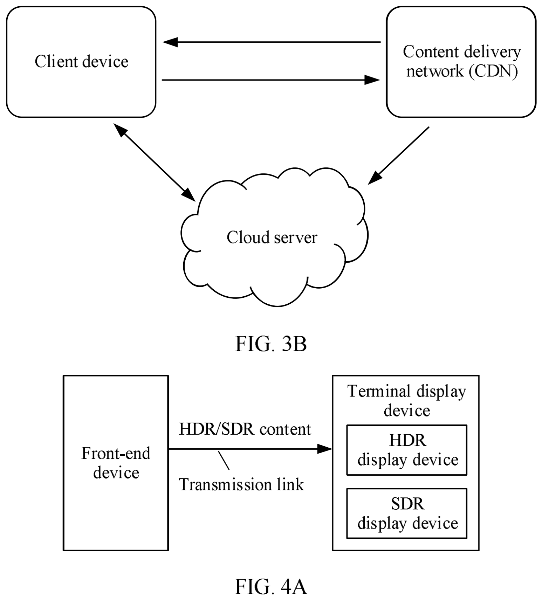

FIG. 3B illustrates an architecture of a streaming media system. The following describes, with reference to FIG. 3B, an example architecture of a streaming media system in this application. The architecture of the streaming media system includes a client device, a content delivery network, and a cloud server.

A user on the client device sends a play or playback request to a cloud platform. Optionally, content of the sent request may be a title of a movie or television program to be played.

The cloud platform performs decision-making, replies to the client, and sends an address of the content requested by the client on the CDN to the client. Optionally, content sent to the client may be a URL (uniform resource locator). Specifically, a playback application program service in the cloud platform checks user authorization and permission, and then determines which specific files are required to process the playback request by considering features of each client and current network conditions. It should be noted that the content delivery network (CDN) periodically reports a running status, a learned route, and available content (file) to a cache control service on the cloud platform.

Then, the client sends a request to the CDN to play the content based on the address. The CDN provides the content for the client and finally completes the request of the client.

FIG. 4A is a diagram of a possible system architecture to which an embodiment of this application is applicable. The system architecture in embodiments of this application includes a front-end device, a transmission link, and a terminal display device. The following describes, with reference to FIG. 4A, the system architecture to which an embodiment of this application is applicable.

The front-end device is configured to capture or produce HDR/SDR content (for example, an HDR/SDR video or image).

In a possible embodiment, the front-end device may be further configured to derive corresponding metadata from the HDR content. The metadata may include global mapping information, local mapping information, and dynamic metadata and static metadata that correspond to the HDR content. The front-end device may send the HDR content and the metadata to the terminal display device over the transmission link. Specifically, the HDR content and the metadata may be transmitted in a form of one data packet (namely, an HDR bitstream), or may be transmitted in a form of two data packets (namely, an HDR bitstream and a metadata stream). This is not specifically limited in embodiments of this application.

Optionally, the terminal display device may be configured to receive the metadata and the HDR content, obtain, based on the global mapping information and the local mapping information that are included in the corresponding metadata derived from the HDR content, and information about the terminal display device, a mapping curve for global tone mapping and local tone mapping on the HDR content, convert the HDR content into display content adapted to an HDR display device or an SDR device in the terminal display device, and display the display content. It should be understood that, in different embodiments, the terminal display device may include a display device having a display capability with a lower dynamic range or a higher dynamic range than the HDR content generated by the front-end device. This is not limited in this application.

Optionally, in this application, the front-end device and the terminal display device may be independent and different physical devices. For example, the front-end device may be a video capture device, or may be a video production device. The video capture device may be a device like a video camera, a camera, or an image drawing machine. The terminal display device may be a device with a video play function, for example, virtual reality (virtual reality, VR) glasses, a mobile phone, a tablet, a television, or a projector.

Optionally, the transmission link between the front-end device and the terminal display device may be a wireless connection or a wired connection. The wireless connection may use technologies such as long term evolution (long term evolution, LTE), the 5th generation (5th generation, 5G) mobile communication, and future mobile communication. The wireless connection may further include technologies such as wireless fidelity (wireless-fidelity, Wi-Fi), Bluetooth, and near field communication (Near Field Communication, NFC). The wired connection may include an Ethernet connection, a local area network connection, and the like. This is not specifically limited.

In this application, functions of the front-end device and functions of the terminal display device may alternatively be integrated into a same physical device, for example, a terminal device having a video photographing function, like a mobile phone or a tablet. In this application, a part of the functions of the front-end device and a part of the functions of the terminal display device may alternatively be integrated into a same physical device. This is not specifically limited.

For a specific implementation of the end-to-end system in FIG. 4A, refer to FIG. 1. Details are not described herein again.

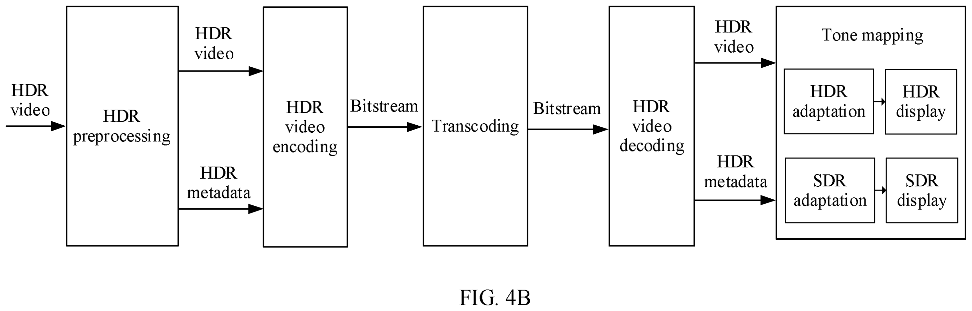

FIG. 4B is a diagram of a structure of an image processing system according to an embodiment of this application. The following describes an end-to-end image processing system provided in this embodiment of this application with reference to FIG. 4B. The system may be used in the system architecture shown in FIG. 4A. In FIG. 4B, for example, HDR/SDR content is an HDR video. The image processing system includes an HDR preprocessing module, an HDR video encoding module, an HDR video decoding module, and a tone mapping module. Optionally, the system may further include a transcoding module.

The HDR preprocessing module and the HDR video encoding module may be located in the front-end device shown in FIG. 4A, and the HDR video decoding module and the tone mapping module may be located in the terminal display device shown in FIG. 4A.

The HDR preprocessing module is configured to: derive dynamic metadata (for example, a maximum value, a minimum value, an average value, and a change range of luminance) from the HDR video; determine mapping curve parameters based on the dynamic metadata and a display capability of a target display device; write the mapping curve parameters into the dynamic metadata to obtain HDR metadata; and transmit the HDR metadata. The HDR video may be captured, or may be an HDR video processed by a colorist. The display capability of the target display device is a displayable luminance range of the target display device.

The HDR video encoding module is configured to perform video encoding on the HDR video and the HDR metadata according to a video compression standard (for example, an AVS or HEVC standard) (for example, embed the HDR metadata into a user-defined part of a bitstream), to output a corresponding bitstream (an AVS or HEVC bitstream).

The transcoding module is configured to receive a bitstream, and transcode (Transcoding) the bitstream. Transcoding is optionally converting a compressed and encoded bitstream into another bitstream to adapt to different network bandwidth, different terminal processing capabilities, and/or different user requirements. Transcoding may be understood as a process of decoding a bitstream and then re-encoding the bitstream. Optionally, the bitstream before transcoding and the bitstream after transcoding may comply with a same video coding standard, or may comply with different video coding standards. This is not limited in this application. Details are not described in the following.

The HDR video decoding module is configured to decode the generated bitstream (the AVS bitstream or the HEVC bitstream) according to a standard corresponding to a bitstream format, and output the decoded HDR video and HDR metadata.

The tone mapping module is configured to: generate a mapping curve based on mapping curve parameters in the decoded HDR metadata; perform tone mapping (namely, HDR adaptation or SDR adaptation) on the decoded HDR video; and send an HDR-adapted video obtained through tone mapping to an HDR display terminal for display, or send an SDR-adapted video to an SDR display terminal for display.

For example, the HDR pre-processing module may exist in a video capture device or a video production device.

For example, the HDR video encoding module may exist in the video capture device or the video production device.

For example, the HDR video decoding module may exist in a set-top box, a television display device, a mobile terminal display device, and a video conversion device like a live streaming or network video application.

For example, the tone mapping module may exist in the set-top box, the television display device, the mobile terminal display device, and the video conversion device like the live streaming or network video application. More specifically, the tone mapping module may exist in a form of a chip or a software program in the set-top box, a television display, and a mobile terminal display, and may exist in a form of a software program in the video conversion device like the live streaming or network video application.

In a possible embodiment, when both the tone mapping module and the HDR video decoding module exist in the set-top box, the set-top box may complete functions of receiving, decoding, and tone mapping of a video bitstream. The set-top box sends, through a high-definition multimedia interface (high-definition multimedia interface, HDMI), decoded video data to a display device for display, so that a user can enjoy video content.

The following describes technical terms that may be used in this application.

(1) High dynamic range (High Dynamic Range, HDR)

A dynamic range (Dynamic Range) is a ratio of highest luminance to lowest luminance of a video or image signal. The dynamic range indicates a ratio of a maximum value to a minimum value of a variable in a plurality of fields. For a digital image, the dynamic range indicates a ratio of a maximum grayscale value to a minimum grayscale value in a range in which an image can be displayed. A dynamic range in nature is quite large, luminance of a night scene under the starry sky is about 0.001 cd/m$^2$, luminance of the sun is 1,000,000,000 cd/m$^2$, and a dynamic range can reach an order of magnitude of $1,000,000,000/0.001=10^{13}$. However, in the real world of the nature, the luminance of the sun and luminance of starlight are not obtained simultaneously. In a same scene in the real world, a dynamic range is between $10^{-3}$ and $10^6$. Currently, in most color digital images, R, G, and B channels each are stored by using 1 byte, namely, 8 bits. In other words, grayscale ranges of the channels are from 0 to 255, where 0 to 255 is a dynamic range of the image. Because in the same scene in the real world, the dynamic range is between $10^{-3}$ and $10^6$, and is referred to as a high dynamic range (High Dynamic Range, HDR), a dynamic range of a common picture is a low dynamic range (Low Dynamic Range, LDR). An imaging process of a digital camera is actually mapping from the high dynamic range of the real world to a low dynamic range of a photo. Mapping from the high dynamic range of the real world to the low dynamic range of the photo is usually a non-linear process.

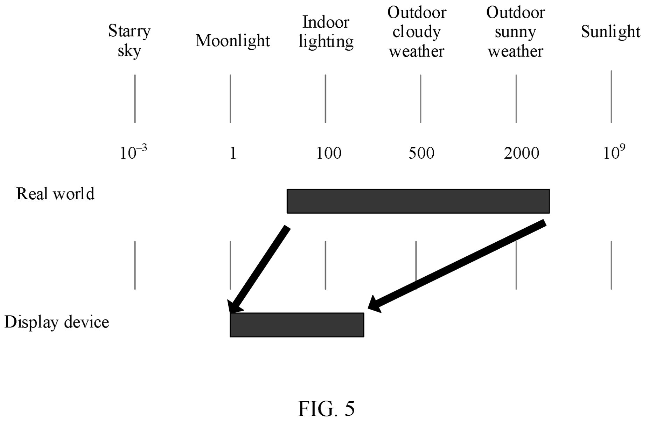

FIG. 5 is a diagram of dynamic mapping from a high dynamic range of the real world to a low dynamic range of a display device. In FIG. 5, the dynamic range of the real world is about 80 to 2000, and the dynamic range mapped to the display device is about 1 to 200.

(2) Standard dynamic range (standard dynamic range, SDR) image and optical-electro transfer function

The standard dynamic range (standard dynamic range, SDR) image is also referred to as a low dynamic range image, and is an image with a dynamic range from 1 nit to 100 nits. The image with a dynamic range from 1 nit to 100 nits complies with BT.709 or sRGB color gamut and a gamma curve is used as an optical-electro transfer curve.

A standard dynamic range image corresponds to a high dynamic range image. An 8-bit (bit) image in a format like JPEG may be considered as a standard dynamic range image. Before video cameras that can photograph HDR images emerge, conventional cameras can record photographed light information within a specific range only by controlling an exposure value. Maximum luminance information of the display device cannot reach luminance information of the real world, and images are viewed on the display device. Therefore, the optical-electro transfer function is required. An earlier display device is a cathode ray tube (Cathode Ray Tube, CRT) display, and an optical-electro transfer function of the cathode ray tube display is a gamma function. The optical-electro transfer function based on the "gamma" function is defined in the ITU-R Recommendation BT.1886 standard.

(3) HDR optical-electro transfer function

As display devices upgrade, illumination ranges of the display devices continuously increase. Illumination of an existing consumer-level HDR display reaches 600 cd/m$^2$, and illumination information of an advanced HDR display can reach 2000 cd/m$^2$, which is far beyond illumination information of an SDR display device. Consequently, the optical-electro transfer function in the ITU-R Recommendation BT.1886 standard cannot well represent display performance of an HDR display device. Therefore, an improved opto-electronic transfer function is required to adapt to upgrade of the display device. Currently, common optical-electro transfer functions include three types: a perceptual quantizer (Perception quantization, PQ) optical-electro transfer function, a hybrid log-gamma (Hybrid Log-Gamma, HLG) optical-electro transfer function, and a scene luminance fidelity (Scene Luminance Fidelity, SLF) optical-electro transfer function. For the foregoing three curves, refer to the conventional technology. Details are not described in this application.

(4) HDR end-to-end process

A dynamic range mapping method is mainly for adaptation between an HDR signal from the front end and the HDR terminal display device of the back end through dynamic range mapping. For example, the front end captures an illumination signal at 4000 nits (nit is a unit of intensity of light), an HDR display capability of the HDR terminal display device (television or iPad) of the back end is only 500 nits, and mapping the illumination signal at 4000 nits to the 500-nit display device is a tone mapping (tone mapping, TM) process from high to low. For another example, the front end captures an SDR signal at 100 nits, and a display end can display a 2000-nit television signal. Well displaying the 100-nit signal on the 2000-nit device is another tone mapping process from low to high.

Dynamic range mapping can be classified into static mapping and dynamic mapping. In a static mapping method, a single piece of data is used to perform an overall tone mapping process based on same video content or same hard disk content, that is, there is usually a same processing curve. This method has advantages that less information is carried and a processing procedure is simple, but has a disadvantage that information may be lost in some scenes because the same curve is used for tone mapping in all scenes. For example, if the curve focuses on protecting bright regions, some details may be lost or even invisible in some extremely dark scenes. Consequently, experience is affected. In a dynamic mapping method, dynamic adjustment is performed based on a specific region, each scene, or each frame of content. This method has an advantage that a processing result is better because different curve processing is performed based on a specific region, each scene, or each frame, and, but has a disadvantage that a large amount of information is carried because related scene information needs to be carried in each frame or scene.

(5) A double-layer bitstream includes encoded data of a base image (for example, first encoded data and third encoded data in embodiments of this application) and encoded data of an enhancement image (for example, second encoded data and fourth encoded data in embodiments of this application). The encoded data of the enhancement image represents the enhancement image (which may also be referred to as an enhancement layer image or the like, which is not limited in this application), and the encoded data of the base image represents the base image (for example, which may also be referred to as a base layer image, a basic image, a basic layer image, or the like, which is not limited in this application). In embodiments of this application, the double-layer bitstream may include one or more enhancement images and one or more enhancement images. In the following embodiments, when the image is processed (including enhancement image data or base image data), unless otherwise specified, same processing is performed on each piece of image data. In embodiments of this application, the double-layer bitstream may be an image (or picture) bitstream or a video bitstream. In other words, the enhancement image and the base image in the double-layer bitstream may be pictures or videos, that is, the image processing method in embodiments of this application may be applied to processing of an image bitstream or processing of a video bitstream. Optionally, in some examples, the double-layer bitstream may also be understood as that an enhancement image bitstream and a base image bitstream are encapsulated into one bitstream. In other words, after receiving the double-layer bitstream, a receive end or a transcoder side processes (which may be referred to as decapsulation processing) the double-layer bitstream, to obtain the base image bitstream and the enhancement image bitstream. In other words, processing (including decoding, image processing, encoding, and the like) on the enhancement image in embodiments of this application may be understood as processing on the enhancement image stream (namely, one or more enhancement images). Processing (including decoding, image processing, encoding, and the like) on the base image may be understood as processing on the base image stream (namely, one or more base images). This is not limited in this application, and details are not described again in the following.

(6) A single-layer bitstream may be an enhancement image bitstream or a base image bitstream. The enhancement image bitstream includes one or more enhancement images. The base image bitstream includes one or more base images. Optionally, the HDR video (or HDR image) in the conventional technology may be encoded according to H.265 or the like and transmitted, and transcoding is performed on the single-layer video (that is, the single-layer bitstream) in a transmission process. After the HDR video is decoded, HDR pixel values of frames, and an HDR format identifier and information are obtained. The HDR video usually needs to be sent to the image processing module to complete operations such as image upsampling/downsampling and enhancement. Then, the HDR pixel values, and the HDR format identifier and information that are processed are sent to the encoder for re-encoding.

(7) A base image (base image) describes an independent image data structure, and includes pixels and image-related metadata.

(8) An enhancement image (enhancement image) describes an enhancement image data structure, and includes pixels and image-related metadata.

(9) A composite image may also be referred to as a derived alternate image (derived alternate image), an alternate image, a replaceable image, a substitute image, or the like in the Ultra-High Definition World Association (Ultra High Definition World Association, UWA) standard. This is not limited in this application. The composite image describes an image data structure that is obtained through processing performed based on a specified format in embodiments of this application and that is used for display or subsequent processing, and includes pixels and image-related metadata.

(10) Metadata (metadata) describes attributes and features of an image, and data of key information required during image processing.

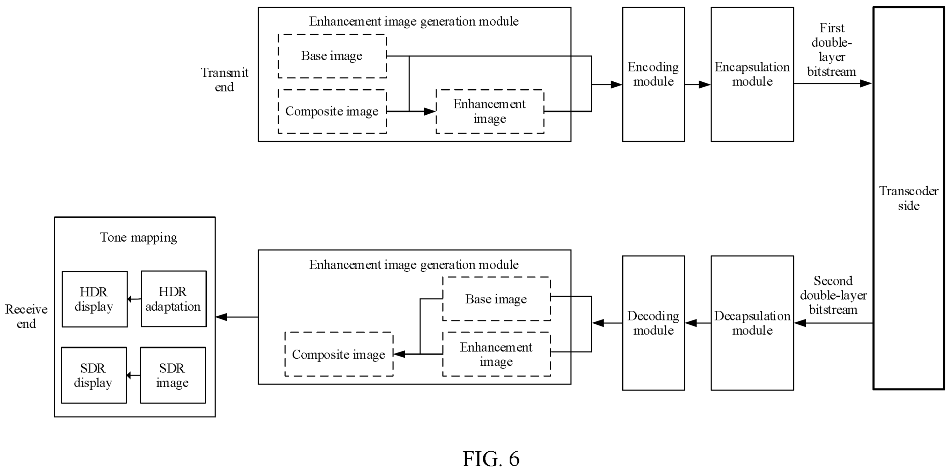

FIG. 6 illustrates an end-to-end system of a double-layer bitstream. As shown in FIG. 6, an end-to-end processing system of a double-layer bitstream (which may also be referred to as an end-to-end system of a double-layer distribution format, which is not limited in this application) includes but is not limited to a transmit end (which may also be referred to as an encoder side, a generation end, or the like, which is not limited in this application), a transcoder side, and a receive end (which may also be referred to as a decoder side or a display end, which is not limited in this application).

At the generation end, an enhancement image generation module obtains dynamic range extending associated image group (dynamic range extending associated image group, DRE-AIG) data (including a base image, an enhancement image, and metadata) from base image data and composite image data. Then, an encoding module generates a base image bitstream, an enhancement image bitstream, and a metadata bitstream. Then, the image bitstreams and the metadata bitstream are encapsulated, to generate a double-layer bitstream (which may be understood as a first double-layer bitstream in embodiments of this application), which may also be referred to as an HDR static image file in a double-layer distribution format.

In embodiments of this application, the generation end transmits the first double-layer bitstream to the transcoder side (which may also be referred to as a distribution end).

The transcoder side receives the first double-layer bitstream, transcodes the first double-layer bitstream, and outputs the transcoded double-layer bitstream (which may be understood as a second double-layer bitstream in embodiments of this application). A specific operation procedure is described in detail in the following embodiments. The first double-layer bitstream and the second double-layer bitstream may comply with a same encoding format or different encoding formats. This is not limited in this application.

After receiving the second double-layer bitstream, the receive end decapsulates the bitstream to derive the base image bitstream, the enhancement image bitstream, and the metadata bitstream. Then, the base image bitstream and the enhancement image bitstream are separately decoded, to obtain the DRE-AIG data, enhancement image data, and the metadata. Then, a composite image is obtained, display adaptation processing is performed on the composite image for display (for the display end, refer to the foregoing descriptions, and details are not described herein again).

Optionally, in some examples, the transcoder side processes the bitstream, and then stores the bitstream or transmits the bitstream to the decoder side. Optionally, the encoder side and the transcoder side may be disposed in different devices, or may be disposed in a same device (for example, both the encoder side and the transcoder side are disposed at the transmit end). This is not limited in this application.

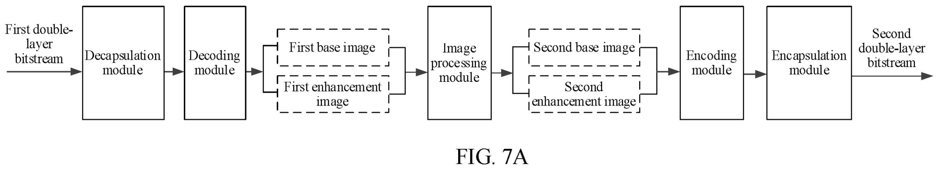

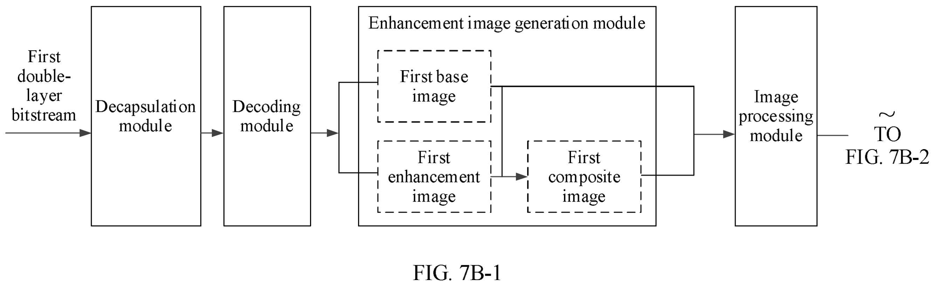

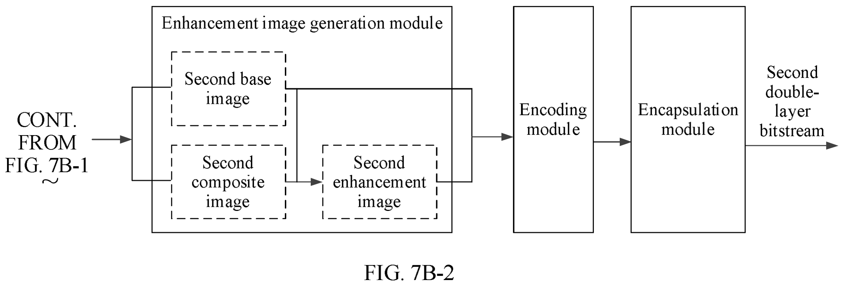

FIG. 7A illustrates a system block diagram of image processing. Embodiments of this application provide an image processing method to which a transcoder side is applicable. As described above, transcoding is optionally converting a compressed and encoded bitstream into another bitstream to adapt to different network bandwidth, different terminal processing capabilities, and/or different user requirements. In embodiments of this application, when performing image processing on image data, the transcoder side may perform corresponding image processing on the double-layer bitstream based on requirements of different scenario, to meet requirements on the transcoded double-layer bitstream in different scenarios. For example, in some scenarios, in consideration of storage costs, a third-party platform to which the transcoder side belongs may perform processing such as downsampling on an image, to reduce resolution of the image. This further reduces storage space occupied by image data, and reduces bandwidth occupied during transmission. For another example, in some scenarios, a platform has a high requirement on quality of image data. In this case, resolution of the image data may be increased during transcoding, to improve quality of the transcoded image data.

In embodiments of this application, an image processing manner corresponds to a requirement of a scenario. The requirement of the scenario may be set by a user, the platform (that is, preset by the transcoder side, or may be set by an operator of the platform), or the transmit end. This is not limited in this application. For specific descriptions, refer to the following.

Refer to FIG. 7A. The transcoder side (which may also be referred to as a transcoding apparatus, a transcoding device, a transcoding module, a transcoding server, or the like, which is not limited in this application) optionally includes but is not limited to a decapsulation module, a decoding module, an image processing module, an encoding module, an encapsulation module, and the like.

The transcoder side receives a first bitstream (which may also be referred to as a first double-layer bitstream, which is not limited in this application). The first bitstream includes but is not limited to encoded data of a first base image, encoded data of a first enhancement image, and encoded data of first metadata. Optionally, the encoded data of the metadata may alternatively be transmitted via a separate metadata bitstream. This is not limited in this application.

The decapsulation module (which may also be considered as a module together with the encapsulation module) is configured to decapsulate the first bitstream, and output the encoded data of the first base image, the encoded data of the first enhancement image, and the encoded data of the first metadata.

The decoding module (which may also be referred to as an image decoding module, which is not limited in this application) is configured to decode the encoded data of the first base image, to obtain the first base image; decode the encoded data of the first enhancement image, to obtain the first enhancement image; and decode the encoded data of the first metadata, to obtain the first metadata.

In embodiments of this application, each bitstream includes at least one image (which may also be referred to as image data). For example, after the enhancement image bitstream is decoded, at least one enhancement image (enhance1 to enhanceN) can be obtained, and after the base image bitstream is decoded, at least one base image (base1 to baseN) can be obtained. In embodiments of this application, a combination of at least one enhancement image and at least one base image is referred to as image data for short. Details are not described again in the following.

Optionally, the decoding module may decode the bitstream by using decoders such as high efficiency video coding (High Efficiency Video Coding, HEVC) and the joint photographic experts group (Joint Photographic Experts Group, JPEG).

In a possible implementation, the image data (including the enhancement image and the base image) obtained by the decoding module may be image data in any color space form like RGB or YUV. This is not limited in this application. The enhancement image and the base image may have a same color space form or different color space forms. This is not limited in this application.

In another possible implementation, a bit width of the image data may be 8 bits, 10 bits, 12 bits, or the like. This is not limited in this application.

In embodiments of this application, the metadata may be embedded into a user-defined part in the bitstream during encoding. For example, the user-defined part may be a supplemental enhancement information (Supplemental Enhancement Information, SEI) field in HEVC or versatile video coding (Versatile Video Coding, VVC), a customized network abstraction layer (Network Abstraction Layer, NAL) unit, or another reserved field. Alternatively, the user-defined part may be an app extension information field encapsulated in a JEIF, a data segment encapsulated in MP4, or the like. The user-defined part may be set based on an actual requirement. This is not limited in this application.

In embodiments of this application, the metadata includes but is not limited to at least one of the following: a source data format, region split information, region traversal sequence information, an image feature, tone mapping information, and other data.

In embodiments of this application, the tone mapping information includes but is not limited to at least one of the following: a tone mapping parameter, a target image processing manner, an adjustment parameter, and the like. The tone mapping parameter includes but is not limited to at least one of the following: a base image tone mapping parameter, an enhancement image tone mapping parameter, and the like. A specific usage manner is described in detail below.

Still refer to FIG. 7A. The image processing module is configured to perform an image processing operation on the first base image and the first enhancement image, and output a second base image and a second enhancement image on which image processing is processed.

The encoding module is configured to encode the second base image, the second enhancement image, and the first metadata, to obtain an encoded base image (for example, denoted as encoded data of the second base image or third encoded data), an encoded enhancement image (for example, denoted as encoded data of the second enhancement image or fourth encoded data), and encoded metadata (for example, denoted as encoded data of second metadata).

The encapsulation module is configured to encapsulate the encoded base image, enhancement image, and metadata, and output a second bitstream. The second bitstream includes the encoded data of the second base image, the encoded data of the second enhancement image, and the encoded data of the second metadata.

FIG. 7B-1 and FIG. 7B-2 illustrate a system block diagram of other image processing. A transcoder side (which may also be referred to as a transcoding apparatus, a transcoding device, a transcoding module, a transcoding server, or the like, which is not limited in this application) optionally includes but is not limited to a decapsulation module, a decoding module, an enhancement image generation module, an image processing module, an encoding module, an encapsulation module, and the like.

The transcoder side receives a first bitstream (which may also be referred to as a first double-layer bitstream, which is not limited in this application). The first bitstream includes but is not limited to encoded data of a first base image, encoded data of a first enhancement image, and encoded data of first metadata. Optionally, the metadata may alternatively be transmitted via a separate metadata bitstream. This is not limited in this application.

The decapsulation module (which may also be considered as a module together with the encapsulation module) is configured to decapsulate the first bitstream, and output the encoded data of the first base image, the encoded data of the first enhancement image, and the encoded data of the metadata.

The decoding module (which may also be referred to as an image decoding module, which is not limited in this application) is configured to decode the encoded data of the first base image, to obtain the first base image; decode the encoded data of the first enhancement image, to obtain the first enhancement image; and decode the encoded data of the metadata, to obtain the metadata.

In embodiments of this application, each bitstream includes at least one image (which may also be referred to as image data). For example, after the encoded data of the enhancement image is decoded, at least one enhancement image (enhance1 to enhanceN) can be obtained, and after the encoded data of the base image is decoded, at least one base image (base1 to baseN) can be obtained. In embodiments of this application, a combination of at least one enhancement image and at least one base image is referred to as image data for short. Details are not described again in the following.

Optionally, the decoding module may decode the bitstream by using decoders such as high efficiency video coding (High Efficiency Video Coding, HEVC) and the joint photographic experts group (Joint Photographic Experts Group, JPEG).

In a possible implementation, the image data (including the enhancement image and the base image) obtained by the decoding module may be image data in any color space form like RGB or YUV. This is not limited in this application. The enhancement image and the base image may have a same color space form or different color space forms. This is not limited in this application.

In another possible implementation, a bit width of the image data may be 8 bits, 10 bits, 12 bits, or the like. This is not limited in this application.

In embodiments of this application, the metadata may be embedded into a user-defined part in the bitstream during encoding. For example, the user-defined part may be a supplemental enhancement information (Supplemental Enhancement Information, SEI) field in HEVC or versatile video coding (Versatile Video Coding, VVC), a customized network abstraction layer (Network Abstraction Layer, NAL) unit, or another reserved field. Alternatively, the user-defined part may be an app extension information field encapsulated in a JEIF, a data segment encapsulated in MP4, or the like. The user-defined part may be set based on an actual requirement. This is not limited in this application.

In embodiments of this application, the metadata includes but is not limited to at least one of the following: a source data format, region split information, region traversal sequence information, an image feature, tone mapping information, and other data.

In embodiments of this application, the tone mapping information includes but is not limited to at least one of the following: a tone mapping parameter, a target image processing manner, an adjustment parameter, and the like. The tone mapping parameter includes but is not limited to at least one of the following: a base image tone mapping parameter, an enhancement image tone mapping parameter, and the like. A specific usage manner is described in detail below.

Still refer to FIG. 7B-1 and FIG. 7B-2. The enhancement image generation module is configured to obtain a composite image (denoted as a first composite image in embodiments of this application) based on the base image (namely, the first base image) and the enhancement image (namely, the first enhancement image). The enhancement image generation module inputs the base image and the composite image to the image processing module.

The image processing module is configured to perform image processing on the image data, and output the processed image data. The image data includes at least one of the base image, the enhancement image, and the composite image. In this example, the base image and the composite image are inputs of the image processing module. When processing the image, the image processing module may perform image processing on the base image and/or the composite image.

Optionally, the image processing module performs image processing on the base image (for example, which may be denoted as the first base image in embodiments of this application) and the composite image (for example, which may be denoted as the first composite image in embodiments of this application), and outputs a processed composite image (which may be denoted as a second composite image in embodiments of this application) and a processed base image (for example, which may be denoted as a second base image in embodiments of this application).

Optionally, the image processing module may determine a target processing manner, and perform image processing on the image data based on the target processing manner.

The enhancement image generation module is configured to obtain an enhancement image (denoted as a second enhancement image in embodiments of this application) based on the base image (namely, the second base image) and the composite image (namely, the second composite image).

The encoding module is configured to encode the base image (namely, the second base image), the enhancement image (namely, the second enhancement image), and the metadata, and output encoded base image (for example, which may be denoted as encoded data of the second base image or third encoded data in embodiments of this application, and used to represent the second base image), the encoded enhancement image (for example, which may be denoted as encoded data of the second enhancement image or fourth encoded data in embodiments of this application, and used to represent the second enhancement image), and the encoded metadata.

The encapsulation module is configured to output a second bitstream (which may also be referred to as a second double-layer bitstream, which is not limited in this application) based on the encoded base image, enhancement image, and metadata.

Optionally, a transcoder side may further include a communication module (which may also be referred to as a transceiver module), configured to receive the first bitstream or send the second bitstream.

Optionally, the transcoder side may further include a storage module, configured to store the second bitstream.

For example, the receive end receives the second bitstream, and performs operations such as decapsulation and decoding on the second bitstream, to obtain the second base image and the second enhancement image. The receive end may generate the second composite image based on the second base image and the second enhancement image. Specifically, the receive end may combine the second base image and the second enhancement image based on the metadata, to obtain the second composite image. The second composite image generated by the receive end is the same as the second composite image output by the image processing module in FIG. 7B-1 and FIG. 7B-2. It may be understood that the second base image and the second enhancement image generated by the transcoder side through transcoding may be combined to obtain the second composite image. Optionally, in some examples, the transcoder side may directly process the first base image and the first enhancement image in an image processing process, to obtain the second base image and the second enhancement image. In other words, in this example, the transcoder side does not generate the first composite image and the second composite image. In this example, it may still be understood that the first base image and the first enhancement image may be combined to obtain the first composite image, and similarly, the second base image and the second enhancement image may be combined to obtain the second composite image.

FIG. 8 illustrates a flowchart of an image processing method. Refer to FIG. 8. The following steps are specifically included but are not limited thereto.

S801: Obtain a first double-layer bitstream, where the first double-layer bitstream includes first encoded data and second encoded data, the first encoded data represents a first base image, the second encoded data represents a first enhancement image, and the first base image and the first enhancement image are used to obtain a first composite image.

For example, a transcoder side obtains the first bitstream. In embodiments of this application, the first bitstream is a double-layer bitstream, and includes encoded data of a base image (namely, the first encoded data) and encoded data of an enhancement image (namely, the second encoded data). To distinguish from a subsequent base image and enhancement image, the base image in the first bitstream is denoted as the first base image, the enhancement image is denoted as the first enhancement image. Optionally, the first base image may include one or more base images. The first enhancement image may include one or more enhancement images.

Optionally, the first bitstream includes encoded data of metadata. In another embodiment, the metadata may alternatively be a separate bitstream. This is not limited in this application.

For example, a decapsulation module decapsulates the first bitstream, and outputs encoded data of the first enhancement image, encoded data of the first base image, and the encoded data of the metadata. Then, a decoding module decodes each bitstream according to a standard corresponding to a bitstream format, to output the image data (including the first enhancement image and the first base image) and the metadata.

The decoding module decodes the encoded data, to obtain the first base image and the first enhancement image.

In embodiments of this application, the first base image and the first enhancement image may be combined to obtain the first composite image (which may be denoted as HDRPic). A specific composition manner is described in detail below.

S802: Perform an image processing operation based on the first double-layer bitstream, to obtain third encoded data and fourth encoded data, where the third encoded data represents a second base image, the fourth encoded data represents a second enhancement image, the second base image and the second enhancement image are used to obtain a second composite image, and a difference between the second composite image and the first composite image relates to the image processing operation.

For example, an enhancement image generation module performs tone mapping on at least one first base image and at least one first enhancement image based on a tone mapping parameter in the metadata, and then combines the at least one tone-mapped first base image and the at least one tone-mapped first enhancement image, to obtain the first composite image.

The following describes tone mapping processing on the first base image and the first enhancement image in detail.

(1) Tone mapping processing is performed on the base image based on a tone mapping parameter of the base image, to obtain the tone-mapped base image (denoted as baseAfter).

FIG. 9 illustrates a tone mapping procedure. Refer to FIG. 9. The enhancement image generation module performs tone mapping on at least one base image (base_1 to base_N) based on the tone mapping parameter of the base image, to obtain at least one tone-mapped base image (denoted as baseAfter_1 to baseAfter_N). It should be noted that in this step, only a processing process of one base image (for example, base_1) is used as an example for description, and same steps are used in processing of other base images. Examples are not enumerated in this application.

For example, processing manners of tone mapping on the base image include but are not limited to the following manners:

Manner 1:

$$baseAfter[i] = base[i],$$

where i is a pixel in the image.

In this manner, the base image is the tone-mapped image, which may be understood as that tone mapping processing is not performed.

Manner 2:

$$baseAfter[i] = base[i] * THH + (A - base[i]) * THL$$

THH is an upper limit value of the base image, and THL is a lower limit value of the base image. It may be understood that THH and THL indicate a value range of the base image. A is a maximum value stored in the base image. It may be understood that in the manner 2, the base image is normalized, so that a value of the base image is normalized to the value range indicated by THH and THL. When the base image base is normalized to a range from 0 to 1.0, a value of A is 1.0.

Optionally, THH and THL are tone mapping parameters, and are included in tone mapping information in the metadata. Optionally, A is a value pre-stored by the decoding module. In other words, an encoder side performs encoding based on the value of A, and correspondingly, the transcoder side also performs tone mapping processing based on the value of A. A specific value may be set based on an actual requirement. This is not limited in this application.

In some examples, THH and THL may alternatively be pre-stored in the decoding module, that is, values agreed on by the transcoder side and the encoder side, and may be set based on an actual requirement. This is not limited in this application.

Manner 3:

$$baseAfter[i] = base[i] + THL$$

THL is a lower limit value of the base image. It may be understood that THL indicates a value range of the base image, that is, the value range is not less than a range of THL. It may be understood that in the manner 3, the base image is normalized, so that a value of the base image is normalized to a value that is not less than the value range indicated by THL.

Optionally, THL is a tone mapping parameter, and is included in tone mapping information in the metadata. In some examples, THL may alternatively be pre-stored in the enhancement image generation module, that is, a value agreed on by the transcoder side and an encoder side.

Manner 4:

$$baseAfter[i] = THH + A - base[i]$$

THH is an upper limit value of the base image. It may be understood that THH indicates a value range of the base image, that is, the value range is not greater than (or higher than) a range of THH. A is a maximum value stored in the base image. It may be understood that in the manner 2, the base image is normalized, so that a value of the base image is normalized to a value that is not greater than the value range indicated by THH. When the base image base is normalized to a range from 0 to 1.0, a value of A is 1.0.

Optionally, THH is a tone mapping parameter, and is included in tone mapping information in the metadata. In some examples, THH may alternatively be pre-stored in the enhancement image generation module, that is, a value agreed on by the transcoder side and an encoder side.

Manner 5:

$$baseAfter[i] = TMB(base[i])$$

TMB() is a tone mapping parameter. Optionally, TMB() may be a global and/or local tone mapping function. In this manner, the decoding module may perform global tone mapping processing or local tone mapping processing on the base image according to the TMB() function.

Optionally, tone mapping parameters in the metadata may further include some parameters, in the TMB() function, indicating a mapping relationship. A decoding function may be used to determine the corresponding TMB() function based on the parameters.

In some examples, TMB() may alternatively be pre-stored in the decoding module, that is, a value agreed on by the transcoder side and an encoder side.

Manner 6:

$$baseAfter[i] = TMB() * base[i]$$

TMB() is a tone mapping parameter. Optionally, TMB() may be a global and/or local tone mapping function. In this manner, the decoding module may perform global tone mapping processing or local tone mapping processing on the base image according to the TMB() function.

In this way, tone mapping processing is performed according to the tone mapping function, so that a composite image obtained based on baseAfter is closer to a raw composite image (that is, a transmit end generates a composite image), and a data amount of an enhancement image in a second bitstream (for a concept, refer to the following) is smaller.

Optionally, tone mapping parameters in the metadata may further include some parameters, in the TMB() function, indicating a mapping relationship. A decoding function may be used to determine the corresponding TMB() function based on the parameters.

In some examples, TMB() may alternatively be pre-stored in the enhancement image generation module, that is, a value agreed on by the transcoder side and an encoder side.

Manner 7:

$$baseAfter[i] = TMB(TMB1(base[i]))$$

TMB() and TMB1() are tone mapping parameters. Optionally, TMB() may be a global and/or local tone mapping function. Optionally, TMB1() may be in a form of line, spline, piecewise curve, or the like. It may be understood that TMB1() indicates to transform the base image base[i] to a specified range. In other words, the tone mapping parameters (for example, THL or THH) in the manner 2 to the manner 4 may also be represented by TMB1(), which may be understood as that the decoding module may obtain corresponding TMB1() based on the tone mapping parameters (for example, THH). Certainly, TMB 1() in the manner 7 (and a manner 8) may also be represented in any one of the manner 2 to the manner 4. This is not limited in this application.

Optionally, tone mapping parameters in the metadata may further include some parameters, in the TMB() function and the TMB 1() function, indicating a mapping relationship. A decoding function may be used to determine the corresponding TMB() function and TMB1() function based on the parameters.

In some examples, TMB() and/or TMB1() may alternatively be pre-stored in the enhancement image generation module, that is, a value agreed on by the transcoder side and an encoder side.

Manner 8:

$$baseAfter[i] = TMB() * TMB1(base[i])$$

TMB() and TMB1() are tone mapping parameters. Optionally, TMB() may be a global and/or local tone mapping function. Optionally, TMB1() may be in a form of line, spline, piecewise curve, or the like. It may be understood that TMB 1() indicates to transform the base image base[i] to a specified range. In other words, the tone mapping parameters (for example, THL or THH) in the manner 2 to the manner 4 may also be represented by TMB1(), which may be understood as that the decoding module may obtain corresponding TMB1() based on the tone mapping parameters (for example, THH). Certainly, TMB1() in the manner 7 (and the manner 8) may also be represented in any one of the manner 2 to the manner 4. This is not limited in this application.

Optionally, tone mapping parameters in the metadata may further include some parameters, in the TMB() function and the TMB 1() function, indicating a mapping relationship. A decoding function may be used to determine the corresponding TMB() function and TMB1() function based on the parameters.

In some examples, TMB() and/or TMB1() may alternatively be pre-stored in the enhancement image generation module, that is, a value agreed on by the transcoder side and an encoder side.

Manner 9:

$$baseAfter[i] = TMB() * TMB1(baseMid1[i]); \text{ or}$$

$$baseAfter[i] = TMB(TMB1(baseMid1[i])), \text{ where}$$

$$baseMid1[i] = F[base[i]] \text{ or } \sum F[n] * base[i+n] \text{ and } baseAfter2[i] = base[i] - baseMid1[i]$$

Tone mapping parameters include but are not limited to TMB(), TMB1(), and F[]. Optionally, TMB() may be a global and/or local tone mapping function. Optionally, TMB1() may be in a form of line, spline, piecewise curve, or the like. It may be understood that TMB1() indicates to transform the base image base[i] to a specified range. In other words, the tone mapping parameters (for example, THL or THH) in the manner 2 to the manner 4 may also be represented by TMB1(), which may be understood as that the decoding module may obtain corresponding TMB1() based on the tone mapping parameters (for example, THH). Certainly, TMB1() in the manner 7 (and the manner 8) may also be represented in any one of the manner 2 to the manner 4. This is not limited in this application.

Optionally, F[] is a spatial filter parameter or another image smoothing function. The enhancement image generation module may obtain baseMid1[i] and baseAfter2[i] based on F[]. A filtering manner may include various forms, for example, bilateral filtering or interpolation filtering. This is not limited in this application.

Optionally, tone mapping parameters in the metadata may further include some parameters, in the TMB() function, the TMB1() function, and the F[] function, indicating a mapping relationship. A decoding function may be used to determine the corresponding TMB() function, TMB 1() function, and F[] function based on the parameters.

In some examples, at least one of TMB(), TMB1(), and F[] may alternatively be pre-stored in the enhancement image generation module, that is, values agreed on by the transcoder side and an encoder side.

Manner 10:

$$baseAfter[i] = F[base[i]] \text{ or } \sum F[n]*base[i+n] \text{ and } baseAfter2[i] = base[i] - baseMid1[i]$$

F[] is a spatial filter parameter or another image smoothing function. The enhancement image generation module may obtain baseMid1[i] and baseAfter2[i] based on F[]. A filtering manner may include various forms, for example, bilateral filtering or interpolation filtering. This is not limited in this application.

Optionally, tone mapping parameters in the metadata may further include some parameters, in the F[] function, indicating a mapping relationship. A decoding function may be used to determine the corresponding F[] function based on the parameters.

In some examples F[] may be pre-stored in the enhancement image generation module, that is, a value agreed on by the transcoder side and an encoder side.

(2) Tone mapping processing is performed on the enhancement image based on a tone mapping parameter of the enhancement image, to obtain the tone-mapped enhancement image (denoted as enhanceAfter).

Specifically, still refer to FIG. 9. The enhancement image generation module performs tone mapping on at least one first enhancement image (enhance_1 to enhance_N) based on the tone mapping parameter of the enhancement image, to obtain at least one tone-mapped enhancement image (denoted as enhanceAfter_1 to enhanceAfter_N). It should be noted that in this step, only a processing process of one enhancement image (for example, enhance_1) is used as an example for description, and same steps are used in processing of other enhancement images. Examples are not enumerated in this application.

For example, processing manners of tone mapping on the enhancement image include but are not limited to the following manners:

Manner 1:

$$enchenceAfter[i] = enchence[i], \text{ where } i \text{ is a pixel in the image}.$$

In this manner, the enhancement image is the tone-mapped image, which may be understood as that tone mapping processing is not performed.

Manner 2:

$$enhanceAfter[i] = enhance[i] * THH + (A - enhance[i]) * THL$$

THH is an upper limit value of the enhancement image, and THL is a lower limit value of the enhancement image. It may be understood that THH and THL indicate a value range of the enhancement image. A is a maximum value stored in the enhancement image. It may be understood that in the manner 2, the enhancement image is normalized, so that a value of the enhancement image is normalized to a value range indicated by THH and THL. When the enhancement image enhance is normalized to a range from 0 to 1.0, a value of A is 1.0.

Optionally, THH and THL are tone mapping parameters, and are included in tone mapping information in the metadata. Optionally, A is a value pre-stored by the decoding module. In other words, an encoder side performs encoding based on the value of A, and correspondingly, the transcoder side also performs tone mapping processing based on the value of A. A specific value may be set based on an actual requirement. This is not limited in this application.

In some examples, THH and THL may alternatively be pre-stored in the decoding module, that is, values agreed on by the transcoder side and the encoder side, and may be set based on an actual requirement. This is not limited in this application.

Manner 3:

$$enhanceAfter[i] = enhance[i] + THL$$

THL is a lower limit value of the enhancement image. It may be understood that THL indicates a value range of the enhancement image, that is, the value range is not less than a range of THL. It may be understood that in the manner 3, the enhancement image is normalized, so that a value of the enhancement image is normalized to a value that is not less than the data range indicated by THL.

Optionally, THL is a tone mapping parameter, and is included in tone mapping information in the metadata. In some examples, THL may alternatively be pre-stored in the enhancement image generation module, that is, a value agreed on by the transcoder side and an encoder side.

Manner 4:

$$enhanceAfter[i] = THH + A - enhance[i]$$

THH is an upper limit value of the enhancement image. It may be understood that THH indicates a value range of the enhancement image, that is, the value range is not greater than (or higher than) a range of THH. A is a maximum value stored in the enhancement image. It may be understood that in the manner 2, the enhancement image is normalized, so that a value of the enhancement image is normalized to a value that is not greater than the value range indicated by THH. When the enhancement image enhance is normalized to a range from 0 to 1.0, a value of A is 1.0.

Optionally, THH is a tone mapping parameter, and is included in tone mapping information in the metadata. In some examples, THH may alternatively be pre-stored in the enhancement image generation module, that is, a value agreed on by the transcoder side and an encoder side.

Manner 5:

$$enhanceAfter[i] = TME(enhance[i])$$

TME() is a tone mapping parameter. Optionally, TME() may be a global and/or local tone mapping function. In this manner, the decoding module may perform global tone mapping processing or local tone mapping processing on the enhancement image according to the TME() function.

Optionally, tone mapping parameters in the metadata may further include some parameters, in the TME() function, indicating a mapping relationship. A decoding function may be used to determine the corresponding TME() function based on the parameters.

In some examples, TME() may alternatively be pre-stored in the enhancement image generation module, that is, a value agreed on by the transcoder side and an encoder side.

(3) An intermediate image (denoted as recHDR) is obtained based on the tone-mapped base image layer data (denoted as baseAfter) and the tone-mapped enhancement image layer data (denoted as enhanceAfter).

Specifically, still refer to FIG. 9. The decoding module obtains at least one intermediate image (denoted as recHDR_1 to recHDR _N) based on at least one tone-mapped base image (baseAfter_1 to baseAfter _N) and at least one tone-mapped enhancement image (enhanceAfter_1 to enhanceAfter _N). In this embodiment of this application, it may also be understood as combining the tone-mapped base image and enhancement image, to obtain the corresponding intermediate image. It should be noted that this step is described by using only generation of a single intermediate image as an example. Examples are not enumerated in this application.

For example, obtaining manners of the intermediate image include but are not limited to the following manners:

Manner 1:

$$recHDR[i] = baseAfter[i] * enhanceAfter[i]$$

Manner 2:

$$recHDR[i] = baseAfter[i] + enhanceAfter[i]$$

Manner 3:

$$recHDR[i] = f1\ baseAfter[i] + f2(enhanceAfter[i])$$

Manner 4:

$$recHDR[i] = f1\ baseAfter[i] * f2(enhanceAfter[i])$$

f1() and f2() are transform functions of a numerical domain. For example, the enhancement image generation module may transform the tone-mapped enhancement image and/or the tone-mapped base image to a same numerical domain according to the f() function, and then combine the tone-mapped enhancement image and the tone-mapped base image (including addition or multiplication).

It should be noted that the composition manners mentioned in this embodiment of this application are merely examples, and in another embodiment, another feasible composition manner may be used. This is not limited in this application.

For example, the tone mapping information in the metadata may include information indicating any composition solution, and the enhancement image generation module may select a corresponding manner based on the indication of the metadata.

In some examples, the composition solution may alternatively be preset in the enhancement image generation module, that is, the transcoder side and the encoder side. This is not limited in this application.

In a possible implementation, as described above, one or more enhancement images and base images may be obtained through decoding. When there are a plurality of enhancement images and/or base images, the enhancement image generation module perform the foregoing processing on the plurality of images, to obtain recHDR[i]. Specific processing manners are as follows:

Manner 1:

recHDR[i] = A * g(baseAfter1[i] * f1(enchenceAfter1[i])) + B * g(baseAfter2[i] * f2(enchenceAfter2[i])) + C * g(baseAfter3[i] * f3(enchenceAfter3[i]))...

f1(), f2(), and f3() are transform functions. The functions may be included in the tone mapping information in the metadata, or may be preset (that is, agreed on in advance) by the transcoder side. f() is used to perform numerical domain transform on the enhancement image and/or the base image. For detailed descriptions, refer to the foregoing descriptions. Details are not described herein again. g() is an inverse normalization function. Optionally, g() may be an adjustment parameter in the tone mapping information in the metadata, or may be preset by the transcoder side. This is not limited in this application. Optionally, A, B, C, and the like are constants preset by the transcoder side, or are included in the tone mapping information in the metadata.

Manner 2:

recHDR[i] = A * g(baseAfter1[i] * f1(enchenceafter1[i])) + B * g(baseAfter2[i]) + C * g(baseAfter3[i])...

f1() is a transform function. The function may be included in the tone mapping information in the metadata, or may be preset (that is, agreed on in advance) by the transcoder side. f() is used to perform numerical domain transform on the enhancement image and/or the base image. For detailed descriptions, refer to the foregoing descriptions. Details are not described herein again. g() is an inverse normalization function. Optionally, g() may be an adjustment parameter in the tone mapping information in the metadata, or may be preset by the transcoder side. This is not limited in this application. Optionally, A, B, C, and the like are constants preset by the transcoder side, or are included in the tone mapping information in the metadata.

For example, this manner may be used to process a scene in which a bitstream includes one enhancement image and a plurality of base images.

Manner 3:

recHDR[i] = A * g(baseAfter1[i] + f1(enchenceAfter1[i])) + B * g(baseAfter2[i] + f2(enchenceAfter2[i])) + C * g(baseAfter3[i] + f3(enchenceAfter3[i]))...

f1(), f2(), and f3() are transform functions. The functions may be included in the tone mapping information in the metadata, or may be preset (that is, agreed on in advance) by the transcoder side. f() is used to perform numerical domain transform on the enhancement image and/or the base image. For detailed descriptions, refer to the foregoing descriptions. Details are not described herein again. g() is an inverse normalization function. Optionally, g() may be an adjustment parameter in the tone mapping information in the metadata, or may be preset by the transcoder side. This is not limited in this application. Optionally, A, B, C, and the like are constants preset by the transcoder side, or are included in the tone mapping information in the metadata.

Manner 4:

recHDR[i] = A * g(baseAfter1[i] + f1(enchenceAfter1[i])) + B * g(baseAfter2[i]) + C * g(baseAfter3[i])...

f1() is a transform function. The function may be included in the tone mapping information in the metadata, or may be preset (that is, agreed on in advance) by the transcoder side. f() is used to perform numerical domain transform on the enhancement image and/or the base image. For detailed descriptions, refer to the foregoing descriptions. Details are not described herein again. g() is an inverse normalization function. Optionally, g() may be an adjustment parameter in the tone mapping information in the metadata, or may be preset by the transcoder side. This is not limited in this application. Optionally, A, B, C, and the like are constants preset by the transcoder side, or are included in the tone mapping information in the metadata.

For example, this manner may be used to process a scene in which a bitstream includes one enhancement image and a plurality of base images.

Manner 5:

recHDR[i] = A * baseAfter1[i] + A1 * f1(enchenceAfter1[i]) + baseAfter1[i] + B * baseAfter2[i] + B1 * f1(enchenceAfter2[i]) + C * baseAfter3[i] + C1 * f1(enchenceAfter3[i])...

f1(), f2(), and f3() are transform functions. The functions may be included in the tone mapping information in the metadata, or may be preset (that is, agreed on in advance) by the transcoder side. f() is used to perform numerical domain transform on the enhancement image and/or the base image. For detailed descriptions, refer to the foregoing descriptions. Details are not described herein again. g() is an inverse normalization function. Optionally, g() may be an adjustment parameter in the tone mapping information in the metadata, or may be preset by the transcoder side. This is not limited in this application. Optionally, A, B, C, and the like are constants preset by the transcoder side, or are included in the tone mapping information in the metadata.

(4) Obtain the composite image (denoted as HDRPic) based on the intermediate image

Specifically, as described above, the tone mapping information in the metadata may further include an adjustment parameter. The enhancement image generation module may perform value adjustment on at least one intermediate image (recHDR_1 to recHDR_N) based on the adjustment parameter, to obtain the composite image.

Adjustment manners are as follows:

Manner 1:

$$HDRPic[i] = recHDR[i]$$

In this manner, it may also be understood as that value adjustment is not performed, that is, value adjustment amplitude is 0.

Manner 2:

$$HDRPic[i] = recHDR[i] + X$$

X is the adjustment parameter.

Optionally, X may be the adjustment parameter in the tone mapping information in the metadata, or may be preset by the transcoder side. This is not limited in this application.

Manner 3:

$$HDRPic[i] = g(recHDR[i])$$

g() is an inverse normalization function, a mapping function, a tone mapping function, or an inverse mapping function.

Optionally, g() may be the adjustment parameter in the tone mapping information in the metadata, or may be preset by the transcoder side. This is not limited in this application. A decoding function may be used to determine the corresponding g() function based on the parameters. Optionally, g() may be a global and/or local tone mapping function. In this manner, the enhancement image generation module may perform global tone mapping processing or local tone mapping processing on the enhancement image according to the g() function.

It should be noted that the value adjustment step is an optional step. If the encoder side performs value adjustment during encoding, the transcoder side correspondingly performs value adjustment. On the contrary, if the encoder side does not perform value adjustment during encoding, the transcoder side does not need to perform value adjustment. Certainly, it may also be understood as that value adjustment is performed, and value adjustment amplitude is 0 (namely, the manner 1 of value adjustment).

It should be noted that baseAfter[i] and enchenceAfter[i] are not limited to any domain in this application, and may be a linear domain, a PQ domain, a LOG domain, or the like. This application also does not limit color space of baseAfter[i] and color space of enchenceAfter[i], where the color space may be YUV, RGB, Lab, HSV, or the like.

Further, it should be noted that after obtaining the composite image, the transcoder side may further perform other image processing on the composite image. This is not limited in this application.

For example, the enhancement image generation module outputs the first composite image and the first base image to the image processing module. The image processing module may perform image processing on the first composite image and the first base image based on a target image processing manner, to obtain a composite image (for example, denoted as a second composite image in embodiments of this application) and a base image (for example, denoted as a second base image in embodiments of this application) on which image processing is performed.

When performing processing, the image processing module needs to determine the target image processing manner. In embodiments of this application, manners in which the image processing module determines the target image processing manner may include but are not limited to any one of the following:

(1) performing determining based on user setting;
(2) performing determining based on metadata; and
(3) performing determining in a preset manner.

In embodiments of this application, a plurality of image processing manners (which are described in detail below) are provided. Which manner is selected as the target image processing manner may be determined in any one of the foregoing three manners.

For example, in a transcoding process, the transcoder side may provide different options, and each option may correspond to one or more image processing manners (a correspondence may be set based on an actual requirement, and is not limited in this application) for a user to select. The user may select a corresponding image processing manner based on required image quality, to control the image quality after transcoding. Optionally, the user in embodiments of this application may be a terminal user, or may be a developer, an operation and maintenance engineer, or the like. This is not limited in this application.

In embodiments of this application, a selectable image processing operation includes but is not limited to at least one of the following: image scaling, image sharpening, image blurring, watermarking, watermark removal, or the like.

For example, image scaling includes image upscaling and image downscaling. Optionally, image downscaling may be decreasing a size (namely, resolution) of an image, so that a size of a downscaled image file is smaller than that before processing. This effectively reduces storage costs of the transcoder side and the receive end, and reduces transmission overheads. For example, if a user 1 shares a double-layer image to a third-party platform, and the third-party platform provides a transcoding service, in consideration of storage costs, the platform may downsample (reduce resolution of) the image and then transmit a downsampled image to a user 2. On the contrary, image upscaling may be optionally increasing a size (namely, resolution) of an image, so that a size of an image file is larger than that before processing. This can improve image quality, and further improve image display effect. For example, after photographing a double-layer image, the user 1 drags the double-layer image into picture editing software (namely, the transcoder side) for processing. The transcoder side may transcode the double-layer image, and perform image processing on image data during transcoding, to upscale the image data and improve resolution of the image.

For example, image sharpening increases contrast between edge pixels, and emphasizes transition between bright and dark regions. Therefore, a contour of the image becomes clearer, local contrast is enhanced, and more details in the image are presented. For example, the transcoder side receives a double-layer bitstream, and an image of the bitstream may be blurry due to a raw image not imported during photographing of the image. The user may select a sharpening function provided by the transcoder side. The transcoder side can sharpen the image, to improve image quality. On the contrary, image blurring may be optionally decreasing contrast between edge pixels, so that a contour of the image becomes blurrier.

There are two purposes for adding a watermark: a user requirement and publicity or security considered by the platform to which the transcoder side belongs. Effect of the watermarking is that some new identifiers or content can be added to the image. The transcoder side can add specified watermarks to the image during image processing. On the contrary, watermark removal may be optionally removing a watermark from an image.

For another example, as described above, the tone mapping information in the metadata may include the target processing manner. In other words, the image processing module may determine an image processing manner based on the target processing manner carried in the tone mapping information in the metadata.

For another example, the transcoder side may preset the target image processing manner.

For example, the image processing module performs an image processing operation on the first composite image and the first base image based on the target image processing manner, to obtain the second composite image and the second base image.

Embodiments of this application provide the following several image processing manners. The image processing module may perform an image processing operation on the first composite image and the first base image based on the following image processing manners, to obtain a third HDR image and the second base image.

The target image processing manner is one of the following image processing manners. It should be noted that the image processing manners enumerated in embodiments of this application are merely examples, and more image processing manners may be included in another embodiment. This is not limited in this application.

Manner 1: An image processing operation (for example, denoted as a first image processing operation in this application) is performed on the first composite image, and an image processing operation (for example, denoted as a second image processing operation in this application) is performed on the first base image. To clearly describe different image processing operations, the first image processing operation and the second image processing operation are distinguished in the following. Details are not described again in the following.

In embodiments of this application, the image processing operation includes but is not limited to the following image processing manners: scaling, sharpening, watermarking, or the like. Certainly, the image processing manners enumerated in embodiments of this application are merely examples for description, and may be set based on an actual requirement. This is not limited in this application.

In other words, in the manner 1, the first image processing operation performed by the image processing module on the first composite image may include at least one of scaling, sharpening, or the like. Certainly, in another embodiment, another image processing manner may be included, and may be set based on an actual requirement. This is not limited in this application.

Performing the first image processing operation by the image processing module on the first composite image may be understood as modifying the first composite image, that is, the image is modified. The modification includes modification of resolution, a color, and content of the image. Details are not described again in the following.

For example, the image processing module outputs the second composite image.

In addition, the image processing module performs the second image processing operation on the first base image, and outputs the second base image. For details, refer to the first composite image. Details are not described again herein.

In embodiments of this application, the first image processing operation may be the same as the second image processing operation. In another embodiment, the first image processing operation may be different from the second image processing operation. This is not limited in this application.

For example, the image processing module may downscale and sharpen the first composite image, and also downscale and sharpen the first base image. In this way, although quality of the second composite image and the second base image is reduced, data amounts of the second composite image and the second base image are also reduced. In this example, the data amount of the transcoded image is reduced, to effectively reduce storage resources at the transcoder side, and reduce bandwidth occupied by the bitstream during transmission.

Manner 2: The first image processing operation is performed on the first composite image, and the first base image is not processed.

For example, performing the first image processing operation by the image processing module on the first composite image may be understood as modifying the first composite image and outputting the second composite image.

The image processing module does not process the first base image, and the second base image output by the image processing module to the encoding module is the first base image. It may be understood as that after the first base image is input to the image processing module, the output second base image is the first base image.

For another part that is not described, refer to the manner 1. Details are not described herein again.

In a possible implementation, some simple processing such as scaling may be performed on the first base image. This is not limited in this application.

Manner 3: The first composite image is not processed, and the second image processing is performed on the first base image.

For example, performing the second image processing operation by the image processing module on the first base image may be understood as modifying the first base image and outputting the second base image.

The image processing module does not process the first composite image, and the second composite image output by the image processing module to the encoding module is the first composite image. It may be understood as that after the first composite image is input to the image processing module, the output second composite image is the first composite image.

For another part that is not described, refer to the manner 1. Details are not described herein again.

In a possible implementation, some simple processing such as scaling may be performed on the first composite image. This is not limited in this application.

Manner 4: The first image processing operation is performed on the first composite image, to obtain the second composite image; and

the second base image is obtained based on the second composite image.

For example, performing the first image processing operation by the image processing module on the first composite image may be understood as modifying the first composite image and outputting the second composite image.

The image processing module may obtain the second base image based on the second composite image. Specifically, the image processing module processes the second composite image according to a preset algorithm, to obtain the second base image. The preset algorithm may include but is not limited to a global tone mapping algorithm, a local tone mapping algorithm, a backward algorithm of the TMB() function (for a concept of the function, refer to the foregoing descriptions), or the like, and may be set based on an actual requirement. This is not limited in this application. Therefore, the output composite image and the base image can be consistent in style, to avoid a backward compatibility problem caused by a large difference in style.

Manner 5: The first image processing operation is performed on the first base image, to obtain the second base image; and

the second composite image is obtained based on the second base image.

For example, performing the second image processing operation by the image processing module on the first base image may be understood as modifying the first base image and outputting the second base image.

The image processing module may obtain the second composite image based on the second base image. Specifically, the image processing module processes the second base image according to a preset algorithm, to obtain the second composite image. The preset algorithm may include but is not limited to a global tone mapping algorithm, a local tone mapping algorithm, or a forward algorithm of the TMB() function (for a concept of the function, refer to the foregoing descriptions).

Manner 6: The first image processing operation is performed on the first base image, to obtain the second base image; and

the second image processing is performed on the first enhancement image, to obtain the second enhancement image.

In this embodiment of this application, performing the second image processing operation by the image processing module on the first base image may be understood as modifying the first base image and outputting the second base image.

In addition, the image processing module may perform the second image processing on the decoded first enhancement image, to obtain the second enhancement image. Optionally, the first image processing and the second image processing may be the same or different.

In this example, the enhancement image generation module may not participate in the transcoding process. In other words, the decoding module outputs the first base image and the first enhancement image to the image processing module, and the image processing module processes the first base image and the first enhancement image, and outputs the second base image and the second enhancement image.

Optionally, the second image processing performed by the image processing module on the first enhancement image may include but is not limited to downscaling or upscaling the enhancement image. This is not limited in this application.

As shown in FIG. 7B-1 and FIG. 7B-2, for example, the transcoder side may obtain the second bitstream based on the second composite image and the second base image. Specifically, the image processing module obtains the second composite image and the second base image, and outputs the second composite image and the second base image to the enhancement image generation module.

The enhancement image generation module obtains the second enhancement image based on the second base image and the second composite image. Optionally, in some examples, the procedure performed by the enhancement image generation module in FIG. 7B-1 and FIG. 7B-2 may be performed by the image processing module. This is not limited in this application.

The encoding module may encode the second base image, the second enhancement image, and the metadata, to obtain encoded data of the second base image (namely, the third encoded data), encoded data of the second enhancement image (namely, the fourth encoded data), and encoded data of the metadata (which may also be referred to as encoded data of second metadata). For example, the encoded data of the second base image represents the second base image, and the encoded data of the second enhancement image represents the second enhancement image. Optionally, any coding scheme like H.265 or H.264 may be used, and the coding scheme may be set based on an actual requirement. This is not limited in this application.

The encapsulation module may encapsulate the encoded data of the second base image, the encoded data of the second enhancement image, and the encoded data of the metadata, to obtain the second bitstream, which may also be referred to as a second double-layer bitstream. The second bitstream includes but is not limited to: the encoded data of the second base image, the encoded data of the second enhancement image, and the encoded data of the metadata (which may also be referred to as the encoded data of the second metadata). Optionally, the encoded data of the metadata may alternatively be transmitted via a separate bitstream. This is not limited in this application.

Therefore, the difference between the first composite image and the second composite image that is obtained by combining the second base image and the second enhancement image in the second bitstream relates to the image processing operation. For example, if the image processing operation is scaling the image data, the difference between the first composite image and the second composite image is a difference in resolution. If the image processing operation is sharpening or blurring the image data, the difference between the first composite image and the second composite image is the difference in definition. For example, the second composite image has higher image quality and clearer details than the first composite image. If the image processing operation is adding a watermark or removing a watermark, optionally, the difference between the first composite image and the second composite image may be that the second composite image has a watermark or has no watermark compared with the first composite image.

This application provides three coding schemes:

Scheme 1:

1. The second base image is encoded, to obtain the encoded data of the second base image. If there are a plurality of second base images, each second base image is encoded, to obtain encoded data of a plurality of second base images.
2. The second enhancement image is encoded, to obtain the encoded data of the second enhancement image. If there are a plurality of second enhancement images, the plurality of second enhancement images are encoded, to obtain a plurality of second enhancement images. In some embodiments, a preset encoding condition (which may be set based on an actual requirement) may be set, and a plurality of second enhancement images that meet the preset encoding condition may be encoded, to obtain at least one second enhancement image. Another enhancement image that does not meet the preset encoding condition may not be processed.

Scheme 2:

1. The second base image is encoded, to obtain the encoded data of the second base image.
2. The encoded data of the second base image is decoded, to obtain the decoded base image.
3. A difference (or gain) between each pixel of the decoded base image and each pixel of the second composite image is obtained.
4. A difference value is encoded, to obtain the encoded data of the second enhancement image.

Scheme 3:

1. The second base image is encoded, to obtain the encoded data of the second base image.
2. A difference (or gain) between each pixel of the encoded data of the second base image and each pixel of the second composite image is obtained.
3. A difference value is encoded, to obtain the encoded data of the second enhancement image.

S803: Output the second double-layer bitstream, where the second double-layer bitstream includes the third encoded data and the fourth encoded data.

For example, the transcoder side outputs the second double-layer bitstream. The second double-layer bitstream includes the encoded data of the base image (namely, the third encoded data), the encoded data of the enhancement image (namely, the fourth encoded data). The transcoder side may output the second double-layer bitstream to the receive end for display, or output the second double-layer bitstream to a storage device (which may be local storage or independent storage) for storage. This is not limited in this application.

An embodiment of this application further provides an image processing apparatus 1000. FIG. 10 is a diagram of an example of an image processing apparatus according to an embodiment of this application. The image processing apparatus is configured to implement the method in embodiments of this application.

As shown in FIG. 10, the image processing apparatus 1000 may include a processor 1001 configured to execute a program or instructions stored in a memory 1002. When the program or the instructions stored in the memory 1002 are executed, the processor 1001 is configured to perform the image encoding method in the embodiment shown in FIG. 8.

Optionally, the image processing apparatus 1000 may further include a communication interface 1003. In FIG. 10, the communication interface 1003 is represented by a dashed line, and is optional for the image processing apparatus 1000.

A quantity of processors 1001, a quantity of memories 1002, and a quantity of communication interfaces 1003 do not constitute limitations on embodiments of this application, and during specific implementation, may be randomly configured based on a service requirement.

Optionally, the memory 1002 is located outside the image processing apparatus 1000.

**EP 4 694 129 A1**

Optionally, the image processing apparatus 1000 includes the memory 1002, the memory 1002 is connected to at least one processor 1001, and the memory 1002 stores the instructions that can be executed by the at least one processor 1001. In FIG. 10, the memory 1002 is represented by a dashed line, and is optional for the image processing apparatus 1000.

The processor 1001 and the memory 1002 may be coupled to each other through an interface circuit, or may be integrated together. This is not limited herein.

A specific connection medium between the processor 1001, the memory 1002, and the communication interface 1003 is not limited in embodiments of this application. In this embodiment of this application, the processor 1001, the memory 1002, and the communication interface 1003 are connected to each other through a bus 1004 in FIG. 10. The bus is represented by a bold line in FIG. 10. A manner of connection between other components is merely an example for description, and is not limited thereto. The bus may be classified into an address bus, a data bus, a control bus, and the like. For ease of representation, only one thick line is for representing the bus in FIG. 10, but this does not mean that there is only one bus or only one type of bus.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

An embodiment of this application further provides a computer-readable storage medium, including a program or instructions. When the program or the instructions are run on a computer, the method in FIG. 8 is performed.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-readable storage media (including but not limited to a disk memory, a CD-ROM, and an optical memory) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device are used to provide a step for implementing a specific function in one or more processes in the flowcharts and/or in one or more blocks in the block diagrams.

It is clearly that a person skilled in the art can make various modifications and variations to this application without departing from the spirit and scope of this application. In this case, if the modifications and variations made to this application fall within the scope of the claims of this application and equivalent technologies thereof, this application is intended to cover these modifications and variations.

## Claims

1. An image processing method, comprising:

   obtaining a first double-layer bitstream, wherein the first double-layer bitstream comprises first encoded data and second encoded data, the first encoded data represents a first base image, the second encoded data represents a first enhancement image, and the first base image and the first enhancement image are used to obtain a first composite image;
   performing an image processing operation based on the first double-layer bitstream, to obtain third encoded data and fourth encoded data, wherein the third encoded data represents a second base image, the fourth encoded data represents a second enhancement image, the second base image and the second enhancement image are used to obtain a second composite image, and a difference between the second composite image and the first composite image relates to the image processing operation; and
   outputting a second double-layer bitstream, wherein the second double-layer bitstream comprises the third encoded data and the fourth encoded data.

2. The method according to claim 1, wherein the method further comprises:

   decoding the first encoded data to obtain the first base image, and decoding the second encoded data to obtain the first enhancement image; and
   combining the first base image and the first enhancement image, to obtain the first composite image.

3. The method according to claim 2, wherein the performing the image processing operation based on the first double-layer bitstream, to obtain the third encoded data and the fourth encoded data comprises:

   performing the image processing operation on the first composite image, to obtain the second composite image;
   obtaining the second base image based on the second composite image; and
   obtaining the third encoded data and the fourth encoded data based on the second composite image and the second base image.

4. The method according to claim 2, wherein the performing the image processing operation based on the first double-layer bitstream, to obtain the third encoded data and the fourth encoded data comprises:

   performing the image processing operation on the first composite image, to obtain the second composite image;
   performing the image processing operation on the first base image, to obtain the second base image; and
   obtaining the third encoded data and the fourth encoded data based on the second composite image and the second base image.

5. The method according to claim 3 or 4, wherein the obtaining the third encoded data and the fourth encoded data based on the second composite image and the second base image comprises:

   obtaining the second enhancement image based on the second composite image and the second base image;
   encoding the second base image, to obtain the third encoded data; and
   encoding the second enhancement image, to obtain the fourth encoded data.

6. The method according to claim 3 or 4, wherein the obtaining the third encoded data and the fourth encoded data based on the second composite image and the second base image comprises:

encoding the second base image, to obtain the third encoded data; and
obtaining the fourth encoded data based on the third encoded data and the second composite image.

7. The method according to any one of claims 1 to 6, wherein the method further comprises:

obtaining an operation manner of the image processing operation, wherein the operation manner comprises at least one of the following: upscaling, downscaling, sharpening, blurring, watermarking, or watermark removal.

8. The method according to claim 7, wherein
the operation manner is preset, or the obtaining the operation manner of the image processing operation comprises:

determining the operation manner based on a received user operation or user requirement; or
obtaining the operation manner from the first double-layer bitstream.

9. An image processing apparatus, comprising:

one or more processors; and
a memory, configured to store one or more programs, wherein
when the one or more programs are executed by the one or more processors, the one or more processors are enabled to implement the method according to any one of claims 1 to 8.

10. A computer-readable storage medium, storing a computer program, wherein when the computer program is executed by a computer or a processor, the computer or the processor is enabled to perform the method according to any one of claims 1 to 8.

11. A computer program product, wherein the computer program product comprises computer program code, and when the computer program code is run on a computer, the computer is enabled to perform the method according to any one of claims 1 to 8.

FIG. 1

EP 4 694 129 A1

2106

**Terminal device**

Smartphone/Tablet computer
2108

Computer/Notebook computer
2110

Network video recorder/Digital
video recorder 2112

Television 2114

Set-top box 2116

Video conference system 2118

Video surveillance system 2120

Personal digital assistant 2122

Vehicle-mounted device 2124

...

2102

2104

Capture device

2126

Display

FIG. 2A

FIG. 2B

Stream → Protocol processing unit (2202) → File → Demultiplexing unit (2204)

Demultiplexing unit outputs:
- Video elementary stream → Video decoder (2206) → Video frame → Synchronization unit (2212)
- Audio elementary stream → Audio decoder (2208) → Audio frame → Synchronization unit (2212)
- Subtitle → Subtitle decoder (2210)

Synchronization unit (2212) → Video/Audio display (2214)

Synchronization unit (2212) → Video/Audio/Subtitle display (2216)

```
┌──────────┐     ┌──────────┐     ┌──────────┐     ┌──────────┐     ┌──────────┐
│  Video   │     │Video     │     │Video     │     │ Video    │     │ Content  │
│ encoding │ ──▶ │stream    │ ──▶ │stream    │ ──▶ │streaming │ ──▶ │ delivery │
│          │     │transmission│   │transcoding│    │media packet│   │ network  │
└──────────┘     └──────────┘     └──────────┘     └──────────┘     └──────────┘
     ▲                │                │                 ▲                │
     │                │                ▼                 │                ▼
┌──────────┐          │          ┌──────────┐            │          ┌──────────┐
│ Content  │          └────────▶ │Video stream│─────────┘           │Plurality of│
│ creation │                     │ storage  │                       │OTT devices│
└──────────┘                     └──────────┘                       └──────────┘
```

FIG. 3A

FIG. 3B

FIG. 4A

FIG. 4B

| Starry sky | Moonlight | Indoor lighting | Outdoor cloudy weather | Outdoor sunny weather | Sunlight |
|---|---|---|---|---|---|
| $10^{-3}$ | 1 | 100 | 500 | 2000 | $10^9$ |

Real world

Display device

FIG. 5

Transmit end

**Enhancement image generation module**

Base image

Composite image → Enhancement image

→ Encoding module → Encapsulation module → First double-layer bitstream → Transcoder side

Receive end

**Tone mapping**

HDR display ← HDR adaptation

SDR display ← SDR image

**Enhancement image generation module**

Base image

Composite image ← Enhancement image

← Decoding module ← Decapsulation module ← Second double-layer bitstream ← Transcoder side

FIG. 6

FIG. 7A

FIG. 7B-1

FIG. 7B-2

S801: Obtain a first double-layer bitstream, where the first double-layer bitstream includes first encoded data and second encoded data, the first encoded data represents a first base image, the second encoded data represents a first enhancement image, and the first base image and the first enhancement image are used to obtain a first composite image

S802: Perform an image processing operation based on the first double-layer bitstream, to obtain third encoded data and fourth encoded data, where the third encoded data represents a second base image, the fourth encoded data represents a second enhancement image, the second base image and the second enhancement image are used to obtain a second composite image, and a difference between the second composite image and the first composite image relates to the image processing operation

S803: Output a second double-layer bitstream, where the second double-layer bitstream includes the third encoded data and the fourth encoded data

FIG. 8

base_1[i]...base_N[i]

Tone mapping

baseAfter_1[i]...baseAfte_N[i]

enhence_1[i]...enhence_N[i]

Tone mapping

enhenceAfter_1[i]...enhenceAfte_N[i]

recHDR_1[i]...recHDR_N[i]

FIG. 9

1000

1001

Processor

1003

Communication interface

1002

Memory

FIG. 10

## INTERNATIONAL SEARCH REPORT

| International application No. |
|---|
| **PCT/CN2024/112174** |

**A.　CLASSIFICATION OF SUBJECT MATTER**

H04N 19/40(2014.01)i

According to International Patent Classification (IPC) or to both national classification and IPC

**B.　FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, DWPI, ENTXT, ENTXTC, VCN, CNKI, IEEE, HEVC, VVC: 码流, 增强层, HDR, 高动态范围, 基础层, 基本层, SDR, 标准动态范围, 合成, 图像处理, bitstream, enhancement layer, HDR, high dynamic range, base layer, SDR, standard dynamic range, composition, image processing

**C.　DOCUMENTS CONSIDERED TO BE RELEVANT**

| Category* | Citation of document, with indication, where appropriate, of the relevant passages | Relevant to claim No. |
|---|---|---|
| X | CN 110226328 A (SONY CORP.) 10 September 2019 (2019-09-10)<br>　　claims 1-10, description, paragraphs 0054-0110 and 0123-0204, and figures 1-5, 9, and 15-17 | 1-11 |
| A | CN 101895748 A (HUAWEI DEVICE CO., LTD.) 24 November 2010 (2010-11-24)<br>　　entire document | 1-11 |
| A | CN 110915221 A (SONY CORP.) 24 March 2020 (2020-03-24)<br>　　entire document | 1-11 |
| A | CN 111491168 A (HUAWEI SOFTWARE TECHNOLOGY CO., LTD. et al.) 04 August 2020 (2020-08-04)<br>　　entire document | 1-11 |
| A | CN 1264249 A (CHANGHONG ELECTRIC APPLIANCES CO., LTD., SICHUAN) 23 August 2000 (2000-08-23)<br>　　entire document | 1-11 |

☑ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **10 November 2024** | **18 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/112174** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2011194618 A1 (DOLBY LABORATORIES LICENSING CORP.) 11 August 2011 (2011-08-11) entire document | 1-11 |
| A | WO 2024042319 A1 (V-NOVA INTERNATIONAL LTD.) 29 February 2024 (2024-02-29) entire document | 1-11 |

Form PCT/ISA/210 (second sheet) (July 2022)

## INTERNATIONAL SEARCH REPORT
### Information on patent family members

| International application No. |
|---|
| **PCT/CN2024/112174** |

| Patent document cited in search report | | | Publication date (day/month/year) | Patent family member(s) | | | Publication date (day/month/year) |
|---|---|---|---|---|---|---|---|
| CN | 110226328 | A | 10 September 2019 | JPWO | 2018143268 | A1 | 21 November 2019 |
| | | | | CA | 3051660 | A1 | 09 August 2018 |
| | | | | EP | 3579559 | A1 | 11 December 2019 |
| | | | | MX | 2019008890 | A | 10 September 2019 |
| | | | | US | 2019356926 | A1 | 21 November 2019 |
| | | | | WO | 2018143268 | A1 | 09 August 2018 |
| | | | | KR | 20190112723 | A | 07 October 2019 |
| CN | 101895748 | A | 24 November 2010 | None | | | |
| CN | 110915221 | A | 24 March 2020 | WO | 2019017362 | A1 | 24 January 2019 |
| | | | | US | 2020154143 | A1 | 14 May 2020 |
| | | | | JPWO | 2019017362 | A1 | 28 May 2020 |
| | | | | KR | 20200028335 | A | 16 March 2020 |
| | | | | MX | 2020000449 | A | 13 July 2020 |
| | | | | CA | 3069106 | A1 | 24 January 2019 |
| | | | | US | 2022086500 | A1 | 17 March 2022 |
| | | | | EP | 3657807 | A1 | 27 May 2020 |
| CN | 111491168 | A | 04 August 2020 | None | | | |
| CN | 1264249 | A | 23 August 2000 | None | | | |
| US | 2011194618 | A1 | 11 August 2011 | RU | 2011138056 | A | 27 March 2013 |
| | | | | KR | 20110115169 | A | 20 October 2011 |
| | | | | JP | 2012520619 | A | 06 September 2012 |
| | | | | BRPI | 1009443 | A2 | 01 March 2016 |
| | | | | EP | 2406959 | A1 | 18 January 2012 |
| | | | | WO | 2010105036 | A1 | 16 September 2010 |
| | | | | HK | 1165156 | A1 | 16 October 2015 |
| | | | | CN | 102388612 | A | 21 March 2012 |
| WO | 2024042319 | A1 | 29 February 2024 | GB | 202212203 | D0 | 05 October 2022 |
| | | | | GB | 2620994 | A | 31 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311037360

- CN 202411111044